(19) Europäisches Patentamt
European Patent Office
Office européen des brevets

(11) **EP 2 778 413 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(21) Anmeldenummer: **13159618.1**

(22) Anmeldetag: **15.03.2013**

(51) Int Cl.:
*F04B 41/06* (2006.01)    *F04B 49/00* (2006.01)
*F04B 49/06* (2006.01)    *F04B 51/00* (2006.01)
*F04D 27/00* (2006.01)    *F25B 49/02* (2006.01)
*F04D 15/00* (2006.01)    *G05D 7/06* (2006.01)
*G06F 17/30* (2006.01)    *G06F 17/50* (2006.01)

(54) **R&I-Schema Eingabe für ein Verfahren zum Steuern und/oder Überwachen einer Kompressoranlage**

R&I scheme input for a process for controlling and/or supervising a compressor system

Entrée de schéma R&I pour un procédé de contrôle et/ou de surveillance d'un système de compresseurs

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.09.2014 Patentblatt 2014/38**

(73) Patentinhaber: **KAESER KOMPRESSOREN SE 96450 Coburg (DE)**

(72) Erfinder:
• **Florian Wagner 95460 Coburg (DE)**
• **Anika Hartwich 95460 Coburg (DE)**
• **Andreas Birkenfeld 97753 Karlstadt (DE)**

(74) Vertreter: **Zech, Stefan Markus et al Meissner, Bolte & Partner GbR Postfach 86 06 24 81633 München (DE)**

(56) Entgegenhaltungen:
**DE-A1- 10 254 530    DE-A1- 10 308 725**
**DE-A1- 19 826 169    DE-A1-102008 064 491**
**DE-A1-102011 079 732**

• **ANDREAS SCHÜLLER, ULRICH EPPLE: "PandIX - Exchanging P&I diagram model data", PROCEEDINGS OF 2012 IEEE 17TH INTERNATIONAL CONFERENCE ON EMERGING TECHNOLOGIES & FACTORY AUTOMATION, September 2012 (2012-09), XP002698901,**
• **GERALD MAYR, RAINER DRATH: "IEC PAS 62424 - GRAFISCHE DARSTELLUNG PLT-AUFGABEN UND DATENAUSTAUCH ZU ENGINEERING-SYSTEMEN", ATP AUTOMATISIERUNGSPRAXIS 49 HEFT 5 (2007), März 2007 (2007-03), Seiten 22-29, XP002698902,**

**Beschreibung**

Die Erfindung betrifft ein Verfahren zum Steuern und/oder Überwachen einer Kompressoranlage umfassend ein oder mehrere Kompressoren und ein oder mehrere Peripheriegeräte, wobei die Kompressoren und Peripheriegeräte in einer vorbestimmten Konfiguration angeordnet bzw. verschaltet sind, wobei die Kompressoranlage über eine Steuer-/Überwachungseinheit gesteuert und/oder überwacht wird, sowie eine Kompressoranlage nach Anspruch 17.

Kompressoranlagen stellen ein System aus einer Vielzahl von Kompressoren und Peripheriegeräten verschiedener Typen dar, die über ein Luftrohrleitungsnetz und, bei Verwendung von Wärmegewinnungssystemen, über ein Wasserrohrleitungsnetz miteinander gekoppelt sind. Im Allgemeinen werden Kompressoranlagen individuell für die Gegebenheiten vor Ort ausgelegt. Eine allgemeingültige Struktur für Kompressoranlagen existiert nicht. Das Verhalten einer konkreten Kompressoranlage kann daher ohne Kenntnis über die Struktur der Kompressoranlage nur eingeschränkt analysiert und bewertet werden.

Für die Ansteuerung und Diagnose der Kompressoren und Peripheriegeräte in einer Kompressoranlage werden sog. übergeordnete Stationssteuerungen verwendet. Als Beispiele für solche Stationssteuerungen seien die Druckschriften DE 103 08 725 A1, sowie die Veröffentlichungen "PandIX - Exchanging P&I diagram model data", Proceedings of 2012 IEEE 17th International Conference on Emerging Technologies & Factory Automation, Krakau, September 2012 und "IEC PAS 62424 - Grafische Darstellung PLT-Aufgaben und Datenaustausch zu Engineering-Systemen", atp Automatisierungspraxis 49 Heft 5, s. 22-29 (2007) genannt. Solche Stationssteuerungen sind bezüglich ihrer Aufgabe mit Leitsystemen in der Prozesstechnik vergleichbar. Der wesentliche Unterschied zu Leitsystemen besteht darin, dass Leitsysteme normalerweise mit einem Steuerungs- und Analyseverfahren arbeiten, das speziell für den zu steuernden Prozess entwickelt wurde. In der Spezialentwicklung ist das Wissen über die Struktur des zu steuernden Prozesses und die Wirkzusammenhänge der Einzelkomponenten des Prozesses kodiert. Bei Stationssteuerungen stellen allerdings speziell für die zu steuernde und zu überwachende Kompressoranlage entwickelte Steuerungs- und Analyseverfahren die Ausnahme dar. Im Normalfall wird ein Standardsteuer- und Analyseverfahren eingesetzt, das lediglich durch Parametrierung auf die Gegebenheiten vor Ort angepasst wird.

Die Aufgabe der vorliegenden Erfindung besteht demgegenüber darin, ein Verfahren zum Steuern und/oder Überwachen einer Kompressoranlage anzugeben, das die Gegebenheiten einer Kompressoranlage vor Ort noch genauer berücksichtigt. Weiterhin soll auch eine Kompressoranlage vorgeschlagen werden, die diese Problematik löst.

Diese Aufgabe wird in verfahrenstechnischer Hinsicht mit einem Verfahren zum Steuern und/oder Überwachen einer Kompressoranlage nach den Merkmalen des Anspruchs 1 und in vorrichtungstechnischer Hinsicht mit einer Kompressoranlage nach den Merkmalen des Anspruchs 17 gelöst. Weiterhin wird noch eine Steuer- und Überwachungseinheit zum Steuern und/oder Überwachen einer Kompressoranlage nach den Merkmalen des Anspruchs 22 vorgeschlagen.

Ein Kerngedanke der vorliegenden Erfindung besteht darin, dass, insbesondere nach Erstellung der Kompressoranlage, die konkret gegebene Konfiguration bzw. der konkret gegebene Wirkzusammenhang zwischen den ein oder mehreren Kompressoren und den ein oder mehreren Peripheriegeräten in Gestalt eines R&I-Schemas über einen Editor eingegeben wird und nachfolgenden Steuer-, Überwachungs-, Diagnose- oder Auswertroutinen zugrunde gelegt bzw. zur Verfügung gestellt wird.

Unter einer Steuer-, Überwachungs-, Diagnose- oder Auswertroutine sollen ganz generell unterschiedliche Steueraufgaben, Überwachungsaufgaben, Diagnoseaufgaben oder Auswertaufgaben verstanden werden.

Sofern davon gesprochen wird, dass die Kompressoren und Peripheriegeräte in einer vorbestimmten Konfiguration angeordnet bzw. verschaltet sind, so soll dies in dem Sinne verstanden werden, dass hiervon auch mehrere wechselnde Zustände, beispielsweise eine durch Umschaltung eines Ventils, eines Schalters erzielbare alternative Konfiguration mit umfasst sind. Eine vorbestimmte Konfiguration ist insofern die Menge aller denkbaren Konfigurationen, die die Kompressoranlage in unterschiedlichen Betriebszuständen einnehmen kann.

Der Editor und/oder der Speicherabschnitt können auch Bestandteil der Steuer-/ Überwachungseinheit sein bzw. dort integriert sein.

Auch soll die Konfiguration in Gestalt eines R&I-Schemas umfassend verstanden werden und insofern die Wirkzusammenhänge der Kompressoren und Peripheriegeräte aus unterschiedlichen Betrachtungswinkeln bzw. in unterschiedlichen Domänen erfassen, wobei für die Verwirklichung der Erfindung die Erfassung der Wirkzusammenhänge in einer Domäne, aus einem Blickwinkel selbstverständlich ausreichend ist.

Als mögliche Domäne bzw. mögliche Betrachtungsblickwinkel kommen beispielsweise, aber nicht abschließend, die drucklufttechnischen Wirkzusammenhänge, die in einem R&I-Schema im engeren Sinne, insbesondere einem Druckluft-R&I-Schema wiedergegeben werden können, die wärmerückgewinnungsbezogenen Wirkzusammenhänge, die in einem R&I-Schema im engeren Sinne, insbesondere in einem Wärmerückgewinnungs-R&I-Schema wiedergegeben werden können, die kühlwasserkreislaufbezogenen Wirkzusammenhänge, die in einem R&I-Schema im engeren Sinne, insbesondere in einem Kühlwasserkreislauf-R&I-Schema wiedergegeben werden können, sowie die stromversorgungsbezogenen Wirkzusammenhänge, die in einem elektrischen Schaltplan wiedergegeben werden können, in Betracht. Ein R&I-Schema im Sinne der vorliegenden Erfindung kann sich darüber hinaus abstrahiert auf die grundlegenden Wirkzusammenhänge in Betrachtung aus einer Blickrichtung/aus einer Domäne beschränken und muss insofern nicht sämtliche Details eines möglicherweise ansonsten üblichen R&I-Schemas umfassen.

Anstelle des Begriffs R&I-Schema kann insofern auch eine graphische Darstellung der Wirkzusammenhänge in einem bestimmten Blickwinkel/in einer bestimmten Domäne verstanden werden, wie beispielsweise eine graphische Darstellung der drucklufttechnischen Wirkzusammenhänge, eine graphische Darstellung der wärmerückgewinnungsbezogenen Wirkzusammenhänge. Es handelt sich insofern um ein Fließschema, das den Fluss von Energie und/oder Betriebsmitteln und/oder Druckluft zwischen den einzelnen Kompressoren und den einzelnen Peripheriegeräten wiedergibt.

Obwohl die Wirkzusammenhänge graphisch veranschaulicht werden, ist es nicht zwingend notwendig, diese über den Editor in graphischer Form einzugeben bzw. zu verarbeiten, obwohl dies eine mögliche Ausgestaltung der vorliegenden Erfindung darstellt. Es ist vielmehr auch möglich, die Wirkzusammenhänge ganz oder teilweise textlich über den Editor einzugeben. Schließlich sind auch andere Eingabeformen denkbar, beispielsweise eine sprachliche Eingabe oder auch eine Eingabe über den Weg der automatischen Bilderkennung. Der Editor kann insofern auch als eine Eingabe-Schnittstelle aufgefasst werden.

Während es prinzipiell bevorzugt wird, die konkret gegebene Konfiguration in Gestalt eines R&I-Schemas erst nach Erstellung der Kompressoranlage einzugeben, ist es aber auch denkbar, diese Eingabe bereits vor Erstellung bzw. während Erstellung der Kompressoranlage vorzunehmen, sofern die konkret gegebene Konfiguration bzw. der konkret gegebene Wirkzusammenhang bereits festliegt.

Voraussetzung für die Erstellung der Ausgangsmodelle ist die Kenntnis über die Wirkzusammenhänge in der Kompressoranlage. Es ist nicht unbedingt notwendig, dass die Kompressoranlage existiert. So können ein oder mehrere Ausgangsmodelle bzw. ein R&I-Schema bzw. mehrere domänespezifische R&I-Schemata bereits bei der Planung einer Kompressoranlage erstellt werden. Es ist auch nicht notwendig, dass die Ausgangsmodelle sofort dann erstellt werden bzw. die R&I-Schemata sofort dann eingegeben werden, wenn die Struktur der Kompressoranlage feststeht. Die Ausgangsmodelle bzw. die R&I-Schemata müssen spätestens dann festgelegt bzw. erstellt werden, wenn die R&I-Schemata bzw. die Ausgangsmodelle verwendet werden sollen.

Es versteht sich von selbst, dass das erfindungsgemäße Verfahren auch wiederholt durchgeführt werden kann, etwa dann, wenn sich an der konkret gegebenen Konfiguration, also im realen Aufbau der Kompressoranlage, etwas geändert hat oder wenn bei der vorherigen Eingabe des R&I-Schemas ein Fehler unterlaufen ist.

Die Steuer-/Überwachungseinheit kann als Einheit ausgebildet sein, die sowohl steuernde als auch überwachende Funktionen oder auch nur steuernde bzw. nur überwachende Funktionen übernimmt.

Eine zweckmäßige Weiterbildung des erfindungsgemäßen Verfahrens sieht vor, dass nach Eingabe der konkret gegebenen Konfiguration diese auf Veranlassung der Steuer-/Überwachungseinheit abgespeichert wird.

In einer möglichen, fakultativen Ausgestaltung umfasst die Eingabe des R&I-Schemas ausschließlich die Konfiguration bzw. Verschaltung der der Steuer-/Überwachungseinheit bereits bekannten Kompressoren und Peripheriegeräte. Hierbei kann der Steuer-/Überwachungseinheit einerseits die Existenz eines bestimmten Kompressors bzw. eines bestimmten Peripheriegeräts als solches bereits bekannt sein oder der Steuer-/Überwachungseinheit kann neben der bloßen Existenz bestimmter Kompressoren bzw. bestimmter Peripheriegeräte bereits schon die konkrete Spezifizierung der vorhandenen Kompressoren und Peripheriegeräte bekannt sein. In einer alternativen, ebenfalls fakultativen Ausgestaltung des Verfahrens umfasst die Eingabe des R&I-Schemas neben der Eingabe der Konfiguration bzw. Verschaltung der Kompressoren und Peripheriegeräte auch die konkrete Spezifizierung der vorhandenen Kompressoren und Peripheriegeräte.

In einer besonders bevorzugten Ausgestaltung des Verfahrens wird die Eingabe des R&I-Schemas nutzerseits vorgenommen. Da nutzerseits oft Kompressoren und/oder Peripheriegeräte unterschiedlicher Hersteller miteinander kombiniert werden zur Erstellung einer konkreten Kompressoranlage, ist die Erfassung der Wirkzusammenhänge nutzerseits eine bevorzugte mögliche Ausgestaltung.

In einer möglichen Weiterbildung des erfindungsgemäßen Verfahrens kann vorgesehen sein, dass bei Eingabe des R&I-Schemas vom Editor die Kompressoren und Peripheriegeräte als entsprechend graphische Symbole vorgegeben bzw. auswählbar sind. Ebenso kann in einer möglichen Ausgestaltung vorgesehen sein, dass bei Eingabe des R&I-Schemas vom Editor die Verknüpfungen der Kompressoren und der Peripheriegeräte als entsprechend graphische Symbole vorgegeben bzw. auswählbar sind.

Weiter kann vorgesehen sein, dass bei Eingabe des R&I-Schemas vom Editor verschiedene mögliche Spezifizierungen der Kompressoren und/oder der Peripheriegeräte vorgegeben bzw. auswählbar sind.

In einer möglichen Ausgestaltung kann vorgesehen sein, dass das Vorhandensein einer oder mehrerer Kompressoren sowie einer oder mehrerer Peripheriegeräte und/oder der Spezifizierung einzelner oder aller Kompressoren und/oder einzelner oder aller Peripheriegeräte von extern übermittelt wird, insbesondere durch ein Upload entsprechender Informationen eingegeben wird, beispielsweise als Upload einer vom Anlagenbauer zur Verfügung gestellten Datei.

Eine mögliche Ausgestaltung des Verfahrens sieht ferner vor, dass einzelne oder alle Kompressoren und/oder Peripheriegeräte sich selbständig bei der Steuer-/ Überwachungseinheit anmelden und vorzugsweise auch ihre Spezifizierung selbständig übermitteln. Diese Anmeldung bzw. Übermittlung kann leitungsgebunden, insbesondere draht- oder glasfasergebunden oder per Funkwellen erfolgen.

Alternativ zur Eingabe eines R&I-Schemas in die Steuer-/Überwachungseinheit durch einen Editor kann das Wissen über die Wirkzusammenhänge auch auf anderen Wegen in die Steuer-/Überwachungseinheit gelangen:

- Import einer Beschreibung/eines Modells in die Steuer-/Überwachungseinheit
- Automatische Detektion und ggf. Erfassung der Spezifizierung einzelner oder aller Kompressoren bzw. einzelner oder aller Peripheriegeräte einer Kompressoranlage. Denkbar ist beispielsweise, dass die Steuer-/Überwachungseinheit durch entsprechende Kommunikation die Kompressoren und/oder Peripheriegeräte nach deren Eigenschaften abfrägt. Alternativ melden sich die Kompressoren und/oder Peripheriegeräte bei der Steuer-/Überwachungseinheit vorzugsweise unter Angabe ihrer Spezifikationen an.
- Schließlich käme auch eine automatische Detektion von Teilen der Kompressoranlage, beispielsweise durch Betriebsparameteranalyse und/oder durch bildliche Erkennungssysteme in Betracht. Dies kann auf die folgende Teildetektion gerichtet sein:

  - Detektion der Verschaltung von Kompressoren und/oder Peripheriegeräten
  - Detektion von Kompressoren und/oder Peripheriegeräten
  - Tuning von Modellparametern

In einer möglichen konkreten Ausgestaltung des erfindungsgemäßen Verfahrens kann die Auswahl graphischer Symbole zur Repräsentation von Kompressoren oder von Peripheriegeräten und/oder die Auswahl konkreter Spezifizierungen und/oder die Auswahl spezieller Verknüpfungen durch Markierung in einer Vorschlagsliste erfolgen, wobei das ausgewählte Objekt bzw. die ausgewählte Information anschließend in das im Editor zu erstellende R&I-Schema übertragbar ist. Hierbei handelt es sich aber um eine sehr konkrete, mögliche Ausgestaltung. Zahlreiche andere Abwandlungen sind denkbar, insbesondere im Zusammenhang mit einer teilweise oder ausschließlichen textlichen Eingabe, einer Eingabe per Spracherkennung oder eine Eingabe per Bilderkennung.

Wie bereits erwähnt, kann es erfindungsgemäß vorgesehen sein, dass nur für eine Domäne/einen Blickwinkel ein Wirkzusammenhang bzw. eine Konfiguration in Gestalt eines R&I-Schemas eingegeben wird. In einer möglichen Ausgestaltung werden für zwei oder mehr unterschiedliche Domänen/Blickwinkel jeweilige R&I-Schemata bzw. jeweilige Konfigurationen bzw. Wirkzusammenhänge eingegeben, beispielsweise ein

- Druckluft-R&I-Schema
- und/oder ein Wärmerückgewinnungs-R&I-Schema
- und/oder ein kühlkreislaufbezogenes R&I-Schema
- und/oder ein stromversorgungsbezogener Wirkzusammenhang, insbesondere ein elektrischer Schaltplan.

Ganz generell wird darauf hingewiesen, dass die Steuer-/Überwachungseinheit in einem oder in mehreren miteinander in Wirkverbindung stehenden Servern oder in einem virtuellen Rechner implementiert sein kann.

Weiterhin kann vorgesehen sein, dass auf Grundlage des R&I-Schemas ein oder mehrere Ausgangsmodelle $M_1$, $M_2$, ... der Kompressoranlage erstellt werden und dass basierend auf diesen Ausgangsmodellen $M_1$, $M_2$, ... ein oder mehrere abgeleitete Modelle $\tilde{M}_a$, $\tilde{M}_b$, ..., die Wirkzusammenhänge zwischen den einzelnen Kompressoren und Peripheriegeräten und ggf. auf dynamische Prozesse berücksichtigen, erstellt werden und dass das eine oder die mehreren abgeleiteten Modelle $\tilde{M}_a$, $\tilde{M}_b$, ... den nachfolgenden Steuer-, Überwachungs-, Diagnose- oder Auswertroutinen zugrunde gelegt werden.

Im Sinne dieses bevorzugten Verfahrens kann sich ein abgeleitetes Modell beispielsweise aus genau einem Ausgangsmodell ergeben. Es ist aber auch möglich, dass sich ein abgeleitetes Modell aus zwei oder mehreren Ausgangsmodellen ergibt oder zwei oder mehr abgeleitete Modelle entstehen, die auf einem einzigen Ausgangsmodell beruhen. Schließlich ist es möglich, dass sich zwei oder mehr abgeleitete Modelle aus zwei oder mehr Ausgangsmodellen ergeben.

Bei dem abgeleiteten Modell $\tilde{M}_a$, $\tilde{M}_b$, ... kann es sich um ein Endmodell handeln, das unmittelbar in nachfolgenden Steuer-, Überwachungs-, Diagnose- oder Auswerteroutinen eingesetzt wird bzw. für diese Steuer-, Überwachungs-, Diagnose- oder Auswertroutinen zugrunde gelegt wird; es kann sich aber auch um ein Zwischenmodell handeln, aus dem in ein oder mehreren Schritten das Endmodell entwickelt wird, das letztendlich in nachfolgenden Steuer-, Überwachungs-, Diagnose- oder Auswertroutinen eingesetzt wird bzw. diese Steuer-, Überwachungs-, Diagnose- oder Auswertroutinen zugrunde gelegt wird.

In einer möglichen Ausgestaltung kann das abgeleitete Modell $\tilde{M}_a$, $\tilde{M}_b$, ... ein aspektspezifisches Modell AM sein, das unter Einsatz eines aspektspezifischen Analysealgorithmus aus dem einen oder mehreren Aus-

gangsmodellen $M_1$, $M_2$, ... oder aus einem oder mehreren Zwischenmodellen $M_1'$, $M_2'$, $AAM_1$, $AAM_2$ erstellt wird. Unter einem aspektspezifischen Modell soll ein Modell zu verstehen sein, das die Kompressoranlage im Hinblick auf eine konkrete Fragestellung beleuchtet. Denkbare Aspekte, die zu einem aspektspezifischen Modell Anlass geben können, sind beispielsweise, aber nicht abschließend: Luftfeuchtigkeit, Druckverlust, Druckluftqualität, Druckgüte, Druckverhalten, Energieeffizienz, Energieaufnahme, Energiebilanz, Temperaturen, Volumenströme/Massenströme, Kosten, Reservegrad und/oder Zuverlässigkeit.

In einer möglichen, bevorzugten Ausgestaltung des Verfahrens ist die Information über das aspektspezifische Verhalten eines Kompressors oder eines Peripheriegerätes in einem oder mehreren im Aspekt-Ausgangsmodell AAM zu berücksichtigenden Komponentenmodell KM und/oder im Analysealgorithmus selbst enthalten.

In den aspektspezifischen Analysealgorithmen ist kodiert, wie die Ausgangsmodelle hinsichtlich eines Aspekts (oder mehrere Aspekte) zu interpretieren sind. Ebenso kann in den aspektspezifischen Analysealgorithmen Wissen über das dynamische Verhalten von Kompressoren und/oder Peripheriegeräten im Hinblick auf den betrachteten Aspekt (die betrachteten Aspekte) enthalten sein. Optional verwendet der aspektspezifische Analysealgorithmus aspektspezifische Komponentenmodelle, um die abgeleiteten Modelle zu erstellen.

In einer bevorzugten Ausgestaltung des Verfahrens ist vorgesehen, dass für jedes zu erstellende aspektspezifische Modell AM ein zugeordneter Analysealgorithmus vorgesehen ist. Ein Analysealgorithmus ist im Normalfall speziell für eine Fragestellung entwickelt, die mit dem aspektspezifischen Modell beantwortet werden soll. Dabei kann es bei verwandten Fragestellungen der Fall sein, dass der gleiche oder ein nur leicht abgewandelter Analysealgorithmus zur Anwendung gelangen kann. Wie bereits erwähnt, ist allerdings jeder aspektspezifischen Fragestellung bzw. jedem aspektspezifischem Modell ein konkreter Analysealgorithmus zugeordnet.

Auch andere abgeleitete Modelle, insbesondere Zwischenmodelle können aus Analysealgorithmen entwickelt werden, die in Einzelfällen mit den abgeleiteten aspektspezifischen Analysealgorithmen gleich oder ähnlich sind.

In einer bevorzugten Ausgestaltung kann vorgesehen sein, dass das abgeleitete Modell $\tilde{M}_a$, $\tilde{M}_b$, ... - egal ob es sich um ein End- oder Zwischenmodell handelt - in der Steuer-/Überwachungseinheit abgespeichert wird bzw. auf Veranlassung der Steuer-/Überwachungseinheit extern abgespeichert wird.

In einer möglichen Weiterbildung kann vorgesehen sein, dass das oder die abgeleiteten Modelle $\tilde{M}_a$, $\tilde{M}_b$, ... in einem externen System hergeleitet und/oder gespeichert und/oder angewandt werden. In diesem Falle werden insofern eine oder mehrere Tätigkeiten im Zusammenhang mit den abgeleiteten Modellen $\tilde{M}_a$, $\tilde{M}_b$, ... extern und ggf. sogar nicht unter unmittelbarer oder mittelbarer Kontrolle der Steuer-/Überwachungseinheit durchgeführt.

Konkret wäre folgender Ablauf denkbar:

1. Betriebsparameter werden in der Kompressoranlage erfasst und in der Steuer-/Überwachungseinheit gespeichert.
2. Die Auswertung dieser Betriebsparameter findet unter Anwendung entsprechender Modelle auf einem externen Server statt. Dieser ist nicht Bestandteil der Steuer-/Überwachungseinheit und auch nicht Bestandteil der Kompressoranlage.
3. Auch der unter 2. angeführte Verfahrensschritt wird als erfindungsgemäßes Verfahren zum Steuern und/oder Überwachen einer Kompressoranlage verstanden, obwohl er nicht selbst innerhalb der Kompressoranlage durchgeführt wird und obwohl auch die Steuer-/Überwachungseinheit hieran nicht beteiligt ist.
4. Das Ergebnis des oben genannten Überwachungs-/Auswertverfahrens kann beispielsweise sein:

   a) Die Berechnung eines nächsten Wartungstermins
   b) Optimierung von Regelungs- oder Steuerungsparametern (beispielsweise die Berechnung eines verringerten Bedarfsdrucks)

5. Mit den unter 4. genannten Ergebnissen kann anschließend

   a) von einem Kompressoranlagenhersteller oder vom Kompressoranlagen-Betreiber eine (automatische) Wartungsplanung durchgeführt werden, um durch rechtzeitige Wartung die Verfügbarkeit der Kompressoranlage zu erhöhen.
   b) Durch die Umparametrierung (manuell oder automatisch) der Kompressoranlagen-Steuerung auf den berechneten optimalen Bedarfsdruck die Energieeffizienz der Drucklufterzeugung verbessert werden.

In einer bevorzugten Ausgestaltung kann vorgesehen sein, dass das oder die abgeleiteten Modelle $\tilde{M}_a$, $\tilde{M}_b$, ... kontinuierlich oder zyklisch oder ereignisbasiert überprüft und ggf. automatisch angepasst werden. Beispielsweise können sich im Betrieb der Kompressoranlage eine verbesserte Datengrundlage ergeben, so dass diese verbesserte Datengrundlage Anlass für eine Anpassung des oder der abgeleiteten Modelle sein kann.

In einer weiteren fakultativen Ausgestaltung kann vorgesehen sein, dass bei Änderung des oder der Ausgangsmodelle $M_1$, $M_2$, ... oder bei Änderung eines oder mehrerer Komponentenmodelle KM, beispielsweise da bauliche Veränderungen an der Kompressoranlage vorgenommen wurden, auch das oder die abgeleiteten Modelle angepasst werden.

In einer möglichen Ausgestaltung können für die Erstellung eines oder mehrerer abgeleiteter Modelle, sei es als Zwischen- oder Endmodell, unterschiedliche domänespezifischen Ausgangsmodelle Berücksichtigung finden. Als domänespezifische Ausgangsmodelle können insbesondere druckluftspezifische Ausgangsmodelle, stromversorgungsspezifische Ausgangsmodelle, auf den Kühlwasserkreislauf bezogene Ausgangsmodelle oder auf die Wärmerückgewinnung bezogene Ausgangsmodelle angesehen und insofern zwei oder mehr Modelle unterschiedlicher Domänen kombiniert bzw. berücksichtigt werden. Es können auch Interaktionen zwischen den unterschiedlichen Domänen erfasst und abgebildet werden.

In einer möglichen Ausgestaltung wird als ein abgeleitetes Modell ein Zwischenmodell angesehen, das gegenüber dem oder den Ausgangsmodellen auch ein dynamisches Verhalten bzw. unterschiedliche Betriebszustände der Kompressoranlage berücksichtigt.

Ein alternatives oder zusätzliches Zwischenmodell, das - falls zusätzlich - hierarchisch vor oder nach dem vordiskutierten Zwischenmodell stehen kann, besteht darin, dass es gegenüber ein oder mehreren Ausgangsmodellen bzw. gegenüber ein oder mehreren Zwischenmodellen aspektspezifisch angepasst und ggf. vereinfacht ist. Wird beispielsweise in einer Kompressoranlage die Frage untersucht, welcher Kompressor jeweils mit einem nachgeschalteten Trockner verknüpft ist, so spielen dazwischen angeordnete Filter keine Rolle und können in einem Zwischenmodell unter dem Blickwinkel dieser Fragestellung beiseite gelassen werden, so dass ein vereinfachtes Zwischenmodell definiert werden kann.

Wird dieser Weg eingeschlagen, d.h. ein aspektspezifisches Ausgangsmodell definiert, so lässt sich bevorzugtermaßen unter Einsatz eines aspektspezifischen Analysealgorithmus ein aspektspezifisches Modell erstellen, im gewählten Beispiel kann also aus dem aspektspezifischen Ausgangsmodell AAM, bei dem beispielsweise die Filter als in der konkreten Fragestellung nicht zu berücksichtigende Peripheriegeräte beiseite gelassen wurden, unter einem geeigneten Analysealgorithmus die Fragestellung beantworten, welcher Trockner durch welchen Kompressor beliefert werden kann.

In einer möglicherweise alternativen oder zusätzlichen Ausgestaltung des erfindungsgemäßen Verfahrens wird ein Verfahren zum Überwachen einer Kompressoranlage umfassend ein oder mehrere Kompressoren und ein oder mehrere Peripheriegeräte vorgeschlagen, wobei die Kompressoren und Peripheriegeräte in einer vorbestimmten Konfiguration angeordnet bzw. verschaltet sind, wobei die Kompressoranlage über eine Steuer-/Überwachungseinheit gesteuert und/oder überwacht wird, wobei das Verfahren eine Prognose für den nächsten Wartungstermin der Kompressoranlage oder einzelner Kompressoren oder einzelner Peripheriegeräte erstellt, insbesondere nach Anspruch 1, dadurch gekennzeichnet,

- dass, insbesondere nach Erstellung der Kompressoranlage, die konkret gegebene Konfiguration in Gestalt eines R&I-Schemas über einen Editor (23) eingegeben wird und diese Eingabe die Grundlage für ein oder mehrere Ausgangsmodelle bildet,
- dass basierend auf diesen Ausgangsmodellen ($M_1$, $M_2$, ...) ein oder mehrere abgeleitete Modelle ($\tilde{M}_a$, $\tilde{M}_b$, ...), die Wirkzusammenhänge zwischen den einzelnen Kompressoren (11, 12, 13) und der Peripheriegeräten (14 bis 21), ggf. auch dynamische Prozesse berücksichtigen, erstellt werden, und
- unter Berücksichtigung standardisierter Betriebsdaten der Kompressoranlage unter Verwendung des oder der abgeleiteten Modelle ($\tilde{M}_a$, $\tilde{M}_b$, ...) eine Prognose für den nächsten Wartungstermin erstellt wird.

In einer möglicherweise alternativen oder zusätzlichen Ausgestaltung des erfindungsgemäßen Verfahrens wird weiterhin ein Verfahren zum Überwachen einer Kompressoranlage umfassend ein oder mehrere Kompressoren und ein oder mehrere Peripheriegeräte vorgeschlagen, wobei die Kompressoren und Peripheriegeräte in einer vorbestimmten Konfiguration angeordnet bzw. verschaltet sind, wobei die Kompressoranlage über eine Steuer-/Überwachungseinheit gesteuert und/oder überwacht wird, wobei das Verfahren als Diagnoseverfahren zur Diagnose der Kompressoranlage oder einzelner Kompressoren oder einzelner Peripheriegeräte ausgestaltet, insbesondere nach Anspruch 1, dadurch gekennzeichnet,

- dass, insbesondere nach Erstellung der Kompressoranlage, die konkret gegebene Konfiguration in Gestalt eines R&I-Schemas über einen Editor (23) eingegeben wird und diese Eingabe die Grundlage für ein oder mehrere Ausgangsmodelle bildet,
- dass basierend auf diesen Ausgangsmodellen ($M_1$, $M_2$, ...) ein oder mehrere abgeleitete Modelle ($\tilde{M}_a$, $\tilde{M}_b$, ...), die Wirkzusammenhänge zwischen den einzelnen Kompressoren (11, 12, 13) und der Peripheriegeräten (14 bis 21), ggf. auch dynamische Prozesse berücksichtigen, erstellt werden, und
- unter Berücksichtigung standardisierter Betriebsdaten der Kompressoranlage unter Verwendung des oder der abgeleiteten Modelle ($\tilde{M}_a$, $\tilde{M}_b$, ...) eine Fehlerdiagnose durchgeführt wird.

Die erfindungsgemäße Kompressoranlage nach den Merkmalen des Anspruchs 18 sieht u.a. vor, dass der Editor zur Eingabe der konkret gegebenen Konfiguration in Gestalt eines R&I-Schemas ausgebildet und bestimmt ist und der Editor mit der Steuer-/Überwachungseinheit in Wirkverbindung steht derart, dass das eingegebene R&I-Schema an die Steuer-/Überwachungseinheit übertragen wird, um es nachfolgenden Steuer-, Überwachungs-, Diagnose- oder Auswertroutinen zugrunde zu legen.

Zunächst gelten für sämtliche Begrifflichkeiten die bereits im Zusammenhang mit dem erfindungsgemäßen Verfahren gegebenen Erläuterungen. Auch kann die Kompressoranlage ganz allgemein dazu eingerichtet und bestimmt sein, das vorstehend beschriebene Verfahren auszuführen und umzusetzen.

In einer konkreten Weiterbildung kann vorgesehen sein, dass die Steuer-/Überwachungseinheit für die Abspeicherung des oder der eingegebenen R&I-Schemata Sorge trägt. Weiter kann in einer möglichen Ausgestaltung vorgesehen sein, dass in der Steuer-/Überwachungseinheit Spezifizierungen der in der Kompressoranlage eingesetzten Kompressoren oder Peripheriegeräte gespeichert sind derart, dass die Eingabe des R&I-Schemas ausschließlich die Konfiguration bzw. Verschaltung der Kompressoren und Peripheriegeräte umfasst. Alternativ kann aber auch vorgesehen sein, wie schon anhand des Verfahrens beschrieben, dass bei Eingabe des R&I-Schemas nicht nur die Konfiguration bzw. Verschaltung der Kompressoren und Peripheriegeräte, sondern auch zunächst überhaupt das Vorhandensein eines oder mehrerer Kompressoren sowie eines oder mehrerer Peripheriegeräte festgelegt wird und/oder vorzugsweise auch Spezifizierungen wenigstens eines Teils der Kompressoren oder Peripheriegeräte eingegeben werden.

In einer möglichen Ausgestaltung kann vorgesehen sein, dass die Steuer-/Überwachungseinheit in einem Speicherabschnitt Listen von Spezifizierungen möglicher Kompressoren oder von Peripheriegeräten und/oder graphischer Symbole zur Repräsentation eingesetzter Kompressoren bzw. eingesetzter Peripheriegeräte und/oder graphische Symbole zur Repräsentation möglicher Verknüpfungen zur Auswahl unter Stellung eines R&I-Schemas im Editor bereithält. Die Auswahl der entsprechenden Informationen bzw. graphischen Symbole kann über verschiedene mögliche Eingabemöglichkeiten erfolgen, wie etwa cursor- bzw. mausgesteuert, textgesteuert, sprachgesteuert, etc. In gleicher Weise kann die Erstellung des R&I-Schemas im Editor anhand der ausgewählten Symbole und/oder Informationen erfolgen.

Die Steuer-/Überwachungseinheit kann in einer bevorzugten Ausgestaltung in einem oder mehreren miteinander in Wirkverbindung stehenden Servern oder in einem virtuellen Rechner implementiert sein.

Weiterhin kann die Kompressoranlage noch dadurch weitergebildet sein, dass die Kompressoren und Peripheriegeräte in einer vorbestimmten Konfiguration angeordnet bzw. verschaltet sind, wobei die Kompressoranlage über eine Steuer-/Überwachungseinheit gesteuert und/oder überwacht wird, die sich dadurch auszeichnet, dass die Steuer-/Überwachungseinheit derart ausgebildet und eingerichtet ist, dass sie bei Steuer-, Überwachungs-, Diagnose- oder Auswertroutinen auf ein oder mehrere abgeleitete Modelle $\tilde{M}_a$, $\tilde{M}_b$, ... der

Kompressoranlage zurückgreift, das oder die basierend auf einem oder mehreren Ausgangsmodellen $M_1$, $M_2$, ... der Kompressoranlage erstellt werden, aber auch Wirkzusammenhänge zwischen den einzelnen Kompressoren und der Peripheriegeräte sowie ggf. auch dynamische Prozesse berücksichtigen.

In einer möglichen Weiterbildung der Kompressoranlage kann vorgesehen sein, dass die Steuer-/Überwachungseinheit für die Abspeicherung des oder der abgeleiteten Modelle $\tilde{M}_a$, $\tilde{M}_b$, ... Sorge trägt.

Weiterhin kann in einer möglichen Ausgestaltung auch noch vorgesehen sein, dass die Steuer-/Überwachungseinheit auch einen Editor umfasst und der Editor zur Eingabe der konkret gegebenen Konfiguration der Kompressoranlage in Gestalt eines R&I-Schemas ausgebildet und bestimmt ist und der Editor weiterhin mit der Steuer-/Überwachungseinheit in Wirkverbindung steht derart, dass das eingegebene R&I-Schema an die Steuer-/Überwachungseinheit übertragen wird und es dort als Ausgangsgrundlage zur Erstellung eines oder mehrerer Ausgangsmodelle $M_1$, $M_2$, ... dient.

Weiter wird eine Steuer- und Überwachungseinheit zum Steuern und/oder Überwachen einer Kompressoranlage umfassend ein oder mehrere Kompressoren und ein oder mehrere Peripheriegeräte beansprucht, wobei die Kompressoren und Peripheriegeräte an einer vorbestimmten Konfiguration angeordnet bzw. verschaltet sind und die Steuer-/Überwachungseinheit die Steuerung und/oder Überwachung der Kompressoranlage bewirkt und mit einem Editor zusammenwirkt, dadurch gekennzeichnet, dass der Editor zur Eingabe der konkret gegebenen Konfiguration in Gestalt eines R&I-Schemas ausgebildet und bestimmt ist und der Editor mit der Steuer-/Überwachungseinheit in Wirkverbindung steht derart, dass das eingegebene R&I-Schema an die Steuer-/Überwachungseinheit übertragen wird, um es nachfolgenden Steuer-, Überwachungs-, Diagnose- oder Auswertroutinen zugrunde zu legen.

Auch hier gelten für die verwendeten Begrifflichkeiten die bereits im Zusammenhang mit dem erfindungsgemäßen Verfahren bzw. der erfindungsgemäßen Kompressoranlage gegebenen Erläuterungen. Die Steuer-/Überwachungseinheit ist allgemein zur Durchführung des erfindungsgemäßen Verfahrens ausgebildet, so dass alle beschriebenen möglichen fakultativen Ausgestaltungen auch in der Steuer- und Überwachungseinheit implementiert sein können.

Die Erfindung wird nachstehend auch hinsichtlich weiterer Merkmale und Vorteile anhand verschiedener Ausführungsbeispiele und unter Bezugnahme auf die nachstehenden Figuren näher erläutert. Hierbei zeigen:

Figur 1     eine rein beispielhafte Konfiguration einer realen Kompressoranlage, die mit einer erfindungsgemäßen Steuer-/Überwachungseinheit zusammenwirkt.

Figur 2     eine Modellierung der Kompressoranlage

| | |
|---|---|
| | nach Figur 1 nach dem Stand der Technik. |
| Figur 3 | ein Ausgangsmodell, das die Kompressoranlage in ihrer konkret gegebenen Konfiguration in Gestalt eines R&I-Schemas darstellt. |
| Figur 4 | ein vom R&I-Schema nach Figur 3 als Ausgangsmodell abgeleitetes Modell M', das unterschiedliche Betriebszustände berücksichtigt. |
| Figur 5 | ein aus dem R&I-Schema nach Figur 3 als Ausgangsmodell abgeleitetes Modell, das als vereinfachtes aspektspezifisches Ausgangsmodell AAM angesehen werden kann. |
| Figur 6 | ein aspektspezifisches Modell AM, das aus dem aspektspezifischen Ausgangsmodell AAM nach Figur 5 entwickelt wurde. |
| Figur 7 | eine Übersicht über die möglichen Pfade zur Entwicklung eines aspektspezifischen Modells bzw. eines aspektspezifischen Endmodells aus einem Ausgangsmodell. |
| Figur 8 | eine schematische Übersicht über die einzelnen Verfahrensschritte und die daraus erzielbaren Vorteile veranschaulicht, wenn einerseits die Wirkzusammenhänge zwischen den Kompressoren und Peripheriegeräten einer Kompressoranlage in Gestalt eines R&I-Schemas als Grundlage für ein oder mehrere Ausgangsmodelle Berücksichtigung finden und andererseits abgeleitete Modelle aus diesen Ausgangsmodellen entwickelt werden. |
| Figur 9 | ein Beispiel für eine Optimierungsroutine, bei der der Bedarfsdruck $p_{Bedarf}$ einer Kompressoranlage unter Verwendung von Modellen optimiert wird. |
| Figur 10 | ein Beispiel zur Veranschaulichung, wie unter Anwendung eines quantitativen Modells einer Kompressoranlage sich das wirksame Puffervolumen einer Kompressoranlage bestimmen lässt. |
| Figur 11 | ein aus dem Aufbau nach Figur 10 abgeleitetes aspektspezifisches Ausgangsmodell AAM. |
| Figur 12 | Veranschaulichung der Änderung des Druckgradienten zum Zeitpunkt des Schaltens eines Kompressors. |

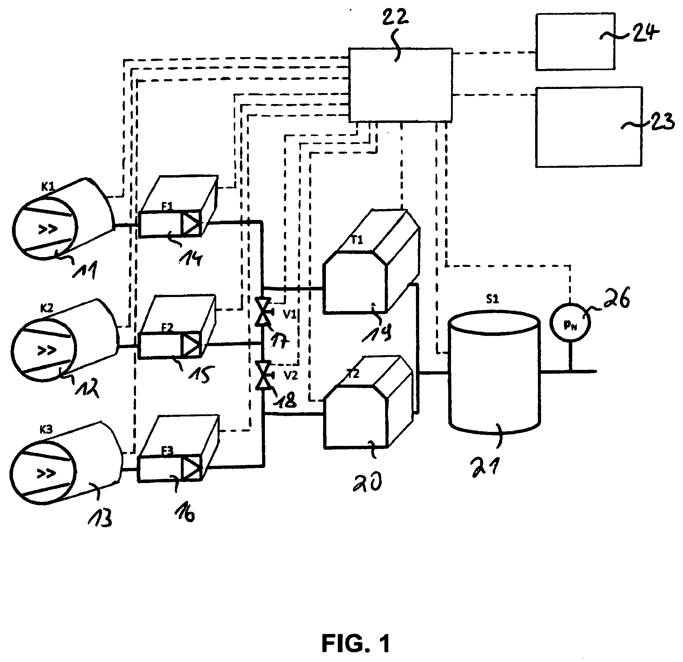

In Figur 1 ist ein beispielhafter Aufbau einer real gegebenen Kompressoranlage veranschaulicht. Die beispielhafte Kompressoranlage soll drei seriell zueinander angeordnete Kompressoren 11, 12, 13 umfassen. Jedem Kompressor 11, 12, 13 kann eindeutig ein Filter 14, 15, 16 zugeordnet werden, der jeweils stromabwärts des zugeordneten Kompressors 11, 12, 13 angeordnet ist. Stromabwärts der Filter 14, 15, 16 sind zwei Trockner 19, 20 angeordnet. Die Druckluft stromabwärts des ersten Filters 14 soll immer über den ersten Trockner 19 strömen. Die Druckluft stromabwärts des zweiten Filters 15 kann über zwei Ventile 17, 18 entweder über den ersten Trockner 19 oder über den zweiten Trockner 20 geleitet werden. Die beiden Ventile 17, 18 sind derart ausgestaltet bzw. angesteuert, dass sie niemals gleichzeitig geöffnet sind, also bei Öffnung des ersten Ventils 17 das zweite Ventil 18 geschlossen bleibt bzw. bei Öffnung des zweiten Ventils 18 das erste Ventil 17 geschlossen bleibt.

Stromabwärts der beiden Trockner 19, 20 ist ein Druckluftspeicher 21 angeordnet. Abstromseitig des Druckluftspeichers 21 ist noch ein Drucksensor 26 angeordnet zur Erfassung des dort gegebenen Betriebsdrucks.

Zum Steuern und/oder Überwachen der Kompressoranlage ist eine Steuer-/Überwachungseinheit 22 vorgesehen, die mit den Kompressoren 11, 12, 13 sowie den Filtern 14, 15, 16, den Ventilen 17, 18, den Trockner 19, 20, dem Druckluftspeicher 21 sowie dem Drucksensor 26 in Wirkverbindung steht. Die Filter 14, 15, 16, die Ventile 17, 18, die Trockner 19, 20, der Druckluftspeicher 21 sowie der Drucksensor 26 bilden hierbei Peripheriegeräte der Kompressoranlage. Die Steuer-/ Überwachungseinheit 22 steht weiterhin noch mit einem Speicherabschnitt 24 sowie einem Editor 23 in Wirkverbindung. Die Steuer-/Überwachungseinheit 22 kann dabei Steuerfunktionen, Überwachungsfunktionen oder Steuer- und Überwachungsfunktionen erfüllen. Unter Überwachung soll vorliegend jegliche Form der Auswertung verstanden werden, also neben einer Überwachung auf Fehlfunktionen, unübliche Betriebszustände, Alarmsituationen, etc. auch eine Diagnose, insbesondere bei einer bereits vorliegenden Fehlermeldung, eine Auswertung im Hinblick auf eine Optimierung oder eine Auswertung zur Prognose eines nächsten Wartungstermins (predictive maintenance).

Um eine oder mehrere dieser Funktionen zu erfüllen, sind Modelle über die Wirkzusammenhänge der Kompressoren 11, 12, 13 sowie der Peripheriegeräte 14 bis 21 zu erfassen und der Steuer-/Überwachungseinheit 22 zugänglich zu machen. Hierzu wird bevorzugtermaßen einerseits die konkret gegebene Konfiguration in Gestalt eines R&I-Schemas über einen Editor 23 eingegeben, der mit der Steuer-/ Überwachungseinheit 22 in Wirkverbindung steht. Andererseits werden von der Steuer-/Überwachungseinheit 22 bzw. extern aus dieser eingegebenen Konfiguration, die den Wirkzusammenhang zwischen den Kompressoren 11, 12, 13 und dem Peripheriegerät 14 bis 21 kodiert, ein oder mehrere Ausgangsmodelle $M_1$, $M_2$, ... erstellt und basierend auf die-

sen Ausgangsmodellen $M_1$, $M_2$, ... ein oder mehrere abgeleitete Modelle $\tilde{M}_a$, $\tilde{M}_b$, ..., die Wirkzusammenhänge zwischen den einzelnen Kompressoren 11, 12, 13 und Peripheriegeräten 14 bis 21 berücksichtigen, entwickelt.

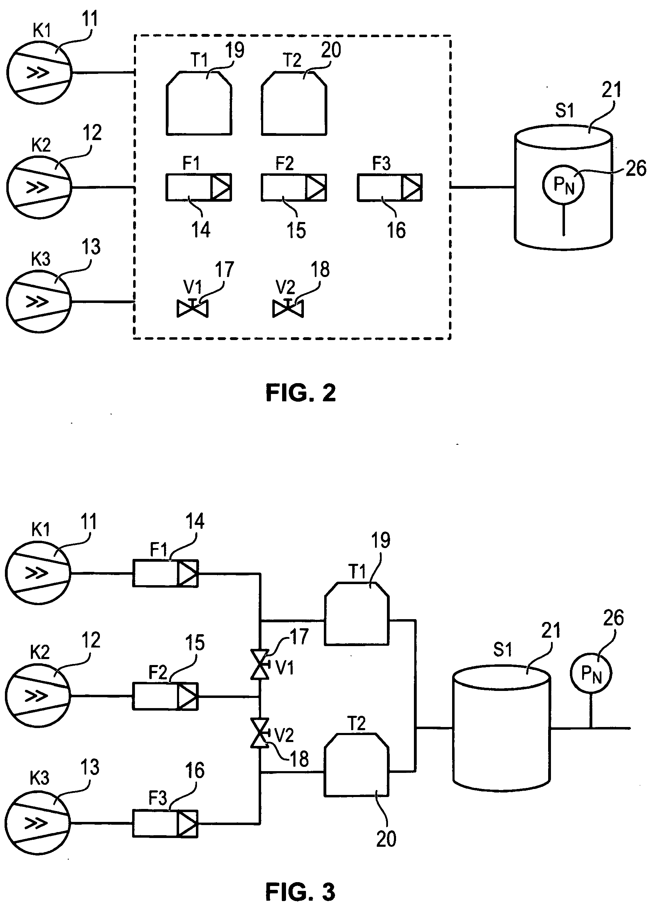

In Abgrenzung hierzu wurde im Stand der Technik, wie anhand von Figur 2 veranschaulicht, der Wirkzusammenhang zwischen den einzelnen Kompressoren 11, 12, 13 und den Peripheriegeräten 14 bis 21, im vorliegenden Beispiel konkret der Filter 14, 15, 16, der Trockner 19, 20 sowie der Ventile 17, 18 und dem Druckluftspeicher 21, nicht berücksichtigt. Bei Verfahren zum Steuern und/oder Überwachen einer Kompressoranlage nach dem Stand der Technik sind die Peripheriegeräte der Druckluftaufbereitung sowie die Verschaltung dieser Peripheriegeräte aus struktureller Sicht nichts anderes als eine Black-Box, was die Kompressoranlage insofern nicht zutreffend abbildet.

Die vorliegende Erfindung sieht daher vor, dass zur Erstellung eines Modells der Kompressoranlage, insbesondere nach Erstellung der Kompressoranlage, die konkret gegebene Konfiguration in Gestalt eines R&I-Schemas über den bereits erwähnten Editor 23 eingegeben wird. Ein für die Kompressoranlage nach Figur 1 repräsentatives R&I-Schema ist in Figur 3 wiedergegeben. Zu berücksichtigen ist, dass für die Eingabe dieses R&I-Schemas viele Varianten denkbar sind. Die Eingabe des R&I-Schemas soll mindestens den Schritt der Festlegung der Wirkzusammenhänge zwischen den Kompressoren 11, 12, 13 und den Peripheriegeräten 14 bis 21 umfassen, kann vorzugsweise aber auch einen Vorschritt, nämlich die Erfassung des Vorhandenseins der Kompressoren 11, 12, 13 und der einzelnen Peripheriegeräte 14 bis 21 umfassen, vorzugsweise auch noch einen weiteren dritten Schritt, nämlich die Eingabe der Spezifizierungen der Kompressoren 11, 12, 13 sowie der Peripheriegeräte 14 bis 21. Es ist denkbar, dass die Erfassung des Vorhandenseins, der Wirkzusammenhänge und der Spezifizierungen auf unterschiedlichem Wege erfolgen, beispielsweise die Wirkzusammenhänge graphisch über den Editor 23 eingegeben werden, die anderen Informationen der Steuer-/Überwachungseinheit 22 anderweitig übermittelt werden, beispielsweise durch Upload einer z.B. vom Anlagenbauer zur Verfügung gestellten Datei. Auch für die Eingabe über den Editor 23 sind unterschiedlichste Varianten denkbar, wie dies im einleitenden Teil der Beschreibung bereits erläutert wurde.

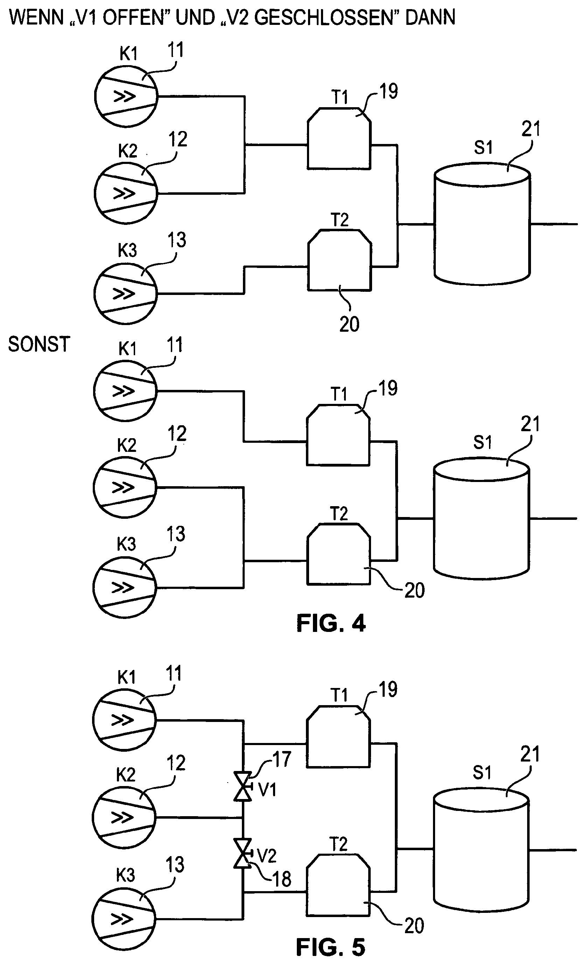

In Figur 4 ist ein abgeleitetes Modell M' veranschaulicht, das bereits unterschiedliche mögliche Betriebszustände des als R&I-Schema gegebenen Ausgangsmodells nach Figur 3 abbildet und berücksichtigt. Während in dem Modell nach Figur 3 die Information darüber, welcher Trockner 19, 20 von welchem Kompressor 11, 12, 13 beliefert wird, noch nicht enthalten ist, berücksichtigt das in Figur 4 veranschaulichte Modell M' die unterschiedlichen Gegebenheiten, indem es die Fallunterscheidung trifft, *"wenn erstes Ventil 17 und zweites Ventil 18 geschlossen, dann ..., ansonsten ..."*. V1 bezeichnet dabei das erste Ventil 17, V2 das zweite Ventil 18. T1 bezeichnet den ersten Trockner 19, T2 den zweiten Trockner 20, K1 bezeichnet den ersten Kompressor 11, K2 den zweiten Kompressor 12 sowie K13 den dritten Kompressor 13.

In Figur 5 ist ein aus dem R&I-Schema nach Figur 3 als Ausgangsmodell abgeleitetes Modell veranschaulicht, das als vereinfachtes aspektspezifisches Ausgangsmodell AAM angesehen werden kann. Wird innerhalb der Domäne Druckluft beispielsweise der Aspekt untersucht, welcher Trockner 19, 20 durch welchen Kompressor 11, 12, 13 beliefert werden kann, um hieraus ein aspektspezifisches Modell AM, das diese Fragestellung beleuchtet, zu entwickeln, wird auf einen zugeordneten Analysealgorithmus und ggf. auf Komponentenmodelle zurückgegriffen. Der zugeordnete Analysealgorithmus kann an einer entsprechenden Stelle abgelegt sein, insbesondere im Zugriffsbereich der Steuer- und Überwachungseinheit 22 abgelegt sein. Aspektspezifische Komponentenmodelle können beispielsweise in einer Datenbank integriert sein.

Im vorliegenden Beispielsfall ist dem Analysealgorithmus bekannt, dass für die Fragestellung, welcher Trockner 19, 20 durch welchen Kompressor 11, 12, 13 beliefert wird, die im Ausgangsmodell nach Figur 3 noch vorhandene Filter 14, 15, 16 unberücksichtigt bleiben können. Es ergibt sich insofern für die Fragestellung das in Figur 5 dargestellte aspektspezifische Ausgangsmodell AAM, das gegenüber dem Ausgangsmodell nach Figur 3 dahingehend vereinfacht ist, dass die Filter 14, 15, 16 außer Betracht bleiben.

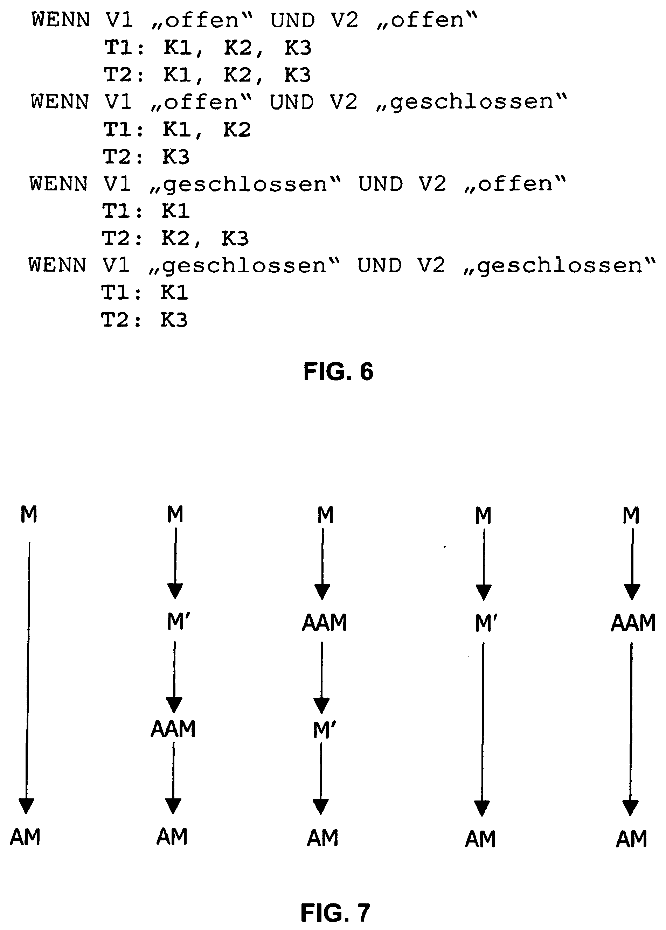

In Figur 6 ist nun das aspektspezifische Modell AM dargestellt, das sich aus dem aspektspezifischen Ausgangsmodell nach Figur 5 für die Fragestellung ergibt, welche der Trockner 19, 20 durch welchen Kompressor 11, 12, 13 beliefert wird. Insofern wurde dem aspektspezifischen Modell nach Figur 6 das aspektspezifische Ausgangsmodell AAM herangezogen, das als Zwischenmodell angesehen werden kann und auf dem Ausgangsmodell M nach Figur 3 beruht.

In Figur 7 sind verschiedene Pfade zur Entwicklung eines aspektspezifischen Modells AM (bzw. eines aspektspezifischen Endmodells) aus einem Ausgangsmodell M dargestellt. Insofern ist es denkbar, ein oder mehrere aspektspezifische Modelle AM direkt aus ein oder mehreren Ausgangsmodellen M zu entwickeln. Es ist aber auch denkbar, ein oder mehrere aspektspezifische Modelle AM über Zwischenmodelle aus ein oder mehreren Ausgangsmodellen M zu entwickeln. Als Zwischenmodelle kommen entweder Modelle M' oder Modelle AAM in Betracht, wobei die Modelle M' generalisierend für eine Domäne/einen Blickwinkel ein (oder ggf. mehrere) Modelle definieren, die beispielsweise unterschiedliche Betriebszustände eines oder mehrerer Ausgangsmodelle definieren. Aspektspezifische Ausgangsmodelle AAM bilden die Grundlage, um unter Zuhilfenahme eines Analysealgorithmus und/oder unter Berücksichtigung von Komponentenmodellen zu einem aspektspezifischen Modell AM zu gelangen. Insofern ist es denkbar, über den Pfad M, M', AAM zum aspektspezifischen Modell AM zu gelangen. Alternativ ist es aber auch möglich, ausgehend vom Ausgangsmodell M über AAM und anschließend M' zum Ausgangsmodell AM zu gelangen. Schließlich ist es weiterhin möglich, ausgehend vom Ausgangsmodell M über M' zum aspektspezifischen Modell AM zu gelangen. Das Beispiel in Figur 6 hat gezeigt, dass es ebenfalls möglich ist, ausgehend vom Ausgangsmodell M über AAM zum aspektspezifischen Modell AM zu gelangen. Bei sämtlichen Modellen M', AAM, AM handelt es sich um abgeleitete Modelle M, die aus einem Ausgangsmodell M entwickelt werden. Allerdings kann das aspektspezifische Modell AM als Endmodell angesehen werden, das für die Beantwortung konkreter Fragestellungen geeignet ist und insofern in nachstehenden Steuer-, Überwachungs-, Diagnose- oder Auswertroutinen Berücksichtigung finden kann.

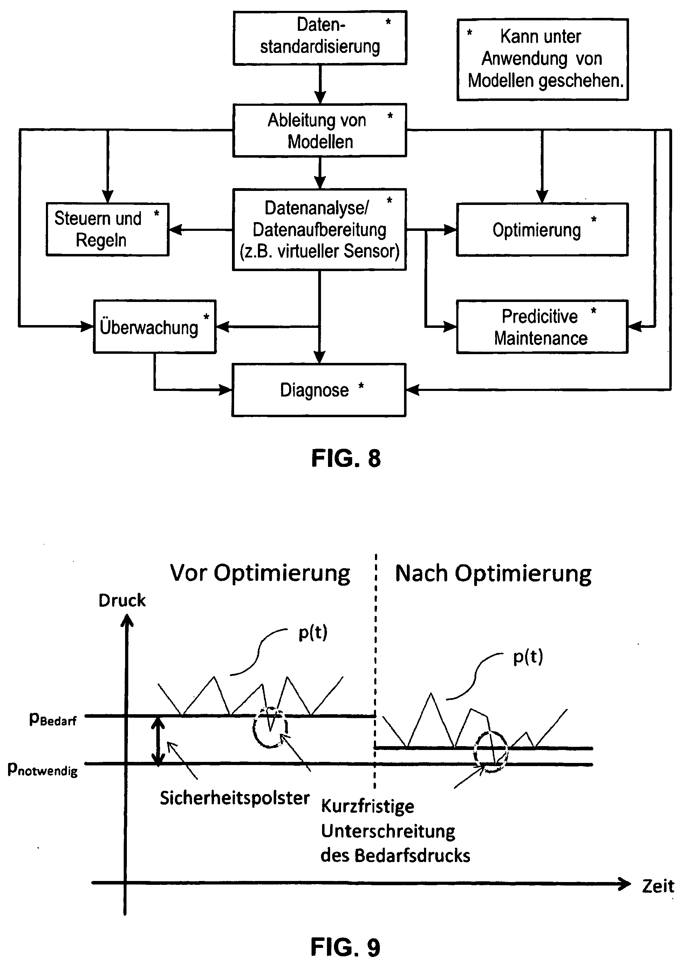

In Figur 8 ist eine schematische Übersicht über die einzelnen Verfahrensschritte und die daraus erzielbaren Vorteile veranschaulicht, wenn einerseits die Wirkzusammenhänge zwischen den Kompressoren und Peripheriegeräten einer Kompressoranlage in Gestalt eines R&I-Schemas als Grundlage für ein oder mehrere Ausgangsmodelle Berücksichtigung finden und andererseits abgeleitete Modelle aus diesen Ausgangsmodellen entwickelt werden.

Insofern sind in Figur 8 die Zusammenhänge der einzelnen Anwendungen von Modellen veranschaulicht. Die in der Abbildung dargestellten Kausalzusammenhänge sind sowohl kumulativ als auch alternativ zu lesen. Grundlage für die Verarbeitung von Daten ist die Standardisierung der Daten in dem Sinne, dass man jedem einzelnen Datum eine wohl definierte Bedeutung zuordnet.

Auf Basis von standardisierten Daten und den domänespezifischen Ausgangsmodellen $M_1$, $M_2$, ... lassen sich wiederum aspektspezifische Modelle AM ableiten, die für zahlreiche weitere Anwendungen herangezogen werden können. Konkret denkbare Anwendungen sind beispielsweise Steuern und Regeln, Optimierung der Randbedingungen, unter denen eine konkrete Kompressoranlage betrieben wird, Datenanalyse, Überwachung, Diagnose, Prognose eines Wartungstermins (predictive maintenance). Hinsichtlich der Anwendung Steuern und Regeln lässt sich festhalten, dass der Betrieb einer Kompressoranlage dadurch verbessert werden kann, dass mithilfe von Modellen Stellhandlungen für die Kompressoren und/oder Peripheriegeräte bei gegebenen Randbedingungen (z.B. einzuhaltender Bedarfsdruck) der Kompressoranlage ermittelt und umgesetzt werden können. Es handelt sich hierbei um eine Optimierung, die in Echtzeit Anwendung findet (Online-Anwendung).

Für das Steuern oder Regeln einer Kompressoranlage sollen nachfolgend noch Beispiele angegeben werden, wie sich aspektbezogen unter Verwendung von Modellen und ggf. abgeleiteten Modellen eine Verbesserung des Betriebsablaufs einer Kompressoranlage erreichen lässt:

a) Aspekt Energieeffizienz:
Beispielsweise kann unter Berücksichtigung der Wirkzusammenhänge der Kompressoranlage, also des entsprechenden R&I-Schemas und ggf. Berücksichtigung weiterer abgeleiteter Modelle erreicht werden, dass Trockner einer Kompressoranlage nur dann betrieben werden, wenn der Bedarf für die Trocknung von Druckluft besteht. In Zeiträumen, in denen der Bedarf für die Trocknung von Druckluft nicht besteht, werden Trockner nicht betrieben und damit Energie für die Deckung "thermischer Leckagen" eingespart.

b) Aspekt Druckluftqualität:
Hier kann bei Kenntnis über die Wirkzusammenhänge zwischen den Kompressoren und Peripheriegeräten einer Kompressoranlage die Reaktion auf den Ausfall eines Trockners wie folgt geregelt werden: Fällt ein Trockner aus, werden die dem Trockner zugeordneten Kompressoren nur noch dann betrieben, wenn die Liefermenge der anderen Kompressoren für die Deckung des Druckluftbedarfs nicht ausreicht. Sofern durch die Druckluftverrohrung möglich, wird die Druckluft der dem ausgefallenen Trockner zugeordneten Kompressoren auf andere Trockner verteilt.

Als ein Beispiel für die Datenanalyse unter Verwendung von Modellen im Sinne der vorliegenden Erfindung können aspektspezifische Modelle erzeugt werden. Grundsätzlich können für die meisten denkbaren Anwendungen, nicht nur bei der Datenanalyse, sondern auch bei der Überwachung, Diagnose, etc. quantitative oder qualitative Aussagen in Betracht kommen. Für den Aspekt der Zuverlässigkeit der Kompressoranlage kann beispielsweise eine quantitative Aussage im Sinne einer Mean-Time-To-Failure-Quantifizierung getroffen werden, beispielsweise 10.000 Stunden. Eine die Zuverlässigkeit der Kompressoranlage beleuchtende Aussage kann aber auch qualitativ erfolgen, beispielsweise wie folgt: Die Zuverlässigkeit der Kompressoranlage wird "hoch", "mittel", "niedrig" bewertet.

Ein Beispiel für eine Optimierung kann die Ermittlung des Parameters Bedarfsdruck sein. Diese Optimierung kann sowohl als Offline-Optimierung als auch im laufenden Betrieb der Kompressoranlage erfolgen. Diesbezüglich wird auf die Veranschaulichung nach Figur 9 verwiesen, die das Problem der Optimierung des Bedarfsdrucks auf den tatsächlich notwendigen Druck besser verständlich macht.

Wesentliche Vorgabe an eine Steuer-/Überwachungseinheit einer Kompressoranlage ist der Druck (Bedarfsdruck), der an der Übergabestelle zum Kundennetz mindestens vorhanden sein muss. Die Steuer-/Überwachungseinheit 22 versucht die Kompressoren 11, 12, 13 so anzusteuern, dass der Bedarfsdruck $p_{Bedarf}$

immer eingehalten wird und dabei die für die Erzeugung von Druckluft notwendige elektrische Energie minimiert wird. Durch einen sprunghaften Anstieg im Druckluftverbrauch kann es passieren, dass die Steuer-/Überwachungseinheit einen Einschaltbefehl an einen Kompressor 11, 12, 13 zu spät ausgibt und daher der Bedarfsdruck unterschritten wird. Daher wird der Bedarfsdruck $p_{Bedarf}$ in der Steuer-/Überwachungseinheit grundsätzlich etwas höher eingestellt als der Druck, den der Kunde tatsächlich benötigt $p_{notwendig}$. Der Abstand zwischen eingestelltem Bedarfsdruck $p_{Bedarf}$, von dem tatsächlich notwendigen Druck $p_{notwendig}$ ist ein Sicherheitspolster. Durch den höheren Bedarfsdruck $p_{Bedarf}$ steigt jedoch der Energiebedarf für die Drucklufterzeugung, da die elektrische Leistungsaufnahme der Kompressoren 11, 12, 13 mit dem Bedarfsdruck $p_{Bedarf}$ ansteigt. Wünschenswert ist es daher, den Bedarfsdruck so niedrig wie möglich, aber immer noch so hoch einzustellen, dass bei Verbrauchssprüngen der tatsächlich notwendige Druck nicht unterschritten wird (vgl. Figur 9).

Es reicht für die Optimierung des Bedarfsdrucks $p_{Bedarf}$ allerdings nicht aus, einfach nur den in der Vergangenheit aufgezeichneten zeitlichen Verlauf des Drucks p(t) zu analysieren, da sich die Änderung des Bedarfsdrucks $p_{Bedarf}$ auf das Verhalten der Steuerung der Kompressoranlage auswirkt. Dadurch ergeben sich andere Schalthandlungen, welche einen anderen Verlauf des Drucks p(t) ergeben.

Durch Anwendung eines Simulationsmodells der Kompressoranlage, abgeleitet aus dem R&I-Schema der Kompressoranlage, kann durch in der Vergangenheit aufgezeichnete Druckverlaufsprofile p(t) der minimale Bedarfsdruck ermittelt werden, bei dem gerade keine Unterschreitungen des tatsächlich notwendigen Drucks mehr auftreten. Mit einem solchen Simulationsmodell, nähere Erläuterungen hierzu lassen sich beispielsweise der WO 2010/072803 A1 entnehmen, kann auch ermittelt werden, wieviel Energie durch die Optimierung des Bedarfdrucks $p_{Bedarf}$ eingespart werden kann.

Auch für die Überwachung von Kompressoranlagen können Modelle eingesetzt werden. Durch den Abgleich des Verhaltens des realen Prozesses mit dem Modell des realen Prozesses kann erkannt werden, wenn im realen Prozess ein Verhalten auftritt, dass man (zumindest unter Berücksichtigung des Modells) so nicht erwartet hat. Laufen Realität und Modell auseinander, wird eine Warnung oder Störung ausgelöst, beispielsweise ein Alarmsignal ausgelöst oder eine Hinweis-E-Mail an einen Anlagenverantwortlichen übersandt.

Im Bereich der Diagnose kann mithilfe von Modellen die Ursache für ein Fehlverhalten eingegrenzt bzw. ermittelt werden. Hierbei werden z.B. am Modell verschiedene Fehlerszenarien durchsimuliert und mit den im realen Prozess beim Auftreten des Fehlers beobachteten Daten abgeglichen. Das Szenario, welches am besten mit der Realität übereinstimmt, gibt einen Hinweis auf die Fehlerursache.

Unter Anwendung von Voraussimulationen ist es möglich, den nächsten Termin für eine Wartung der Kompressoranlage bzw. der Kompressoren bzw. der Peripheriegeräte abzuschätzen. Unter Annahme eines Druckluftverlaufprofils (z.B. in der Vergangenheit in der betroffenen Kompressoranlage beobachtet) wird ermittelt, wie die einzelnen Kompressoren und Peripheriegeräte einer Kompressoranlage in den kommenden Wochen oder Monaten voraussichtlich betrieben bzw. beansprucht werden. Aus dem Verlauf der Betriebszustände der Kompressoren und der Peripheriegeräte und einem Modell für den Verschleiß der wartungsrelevanten Bauteile/Betriebsstoffe kann der Termin bestimmt werden, an dem die Verschleißgrenze (Standzeit) des Bauteils/Betriebsstoffes erreicht ist.

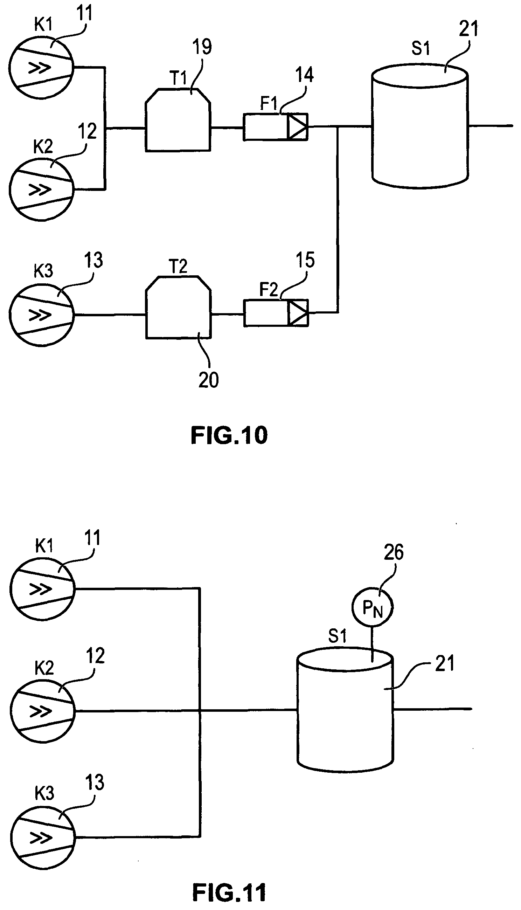

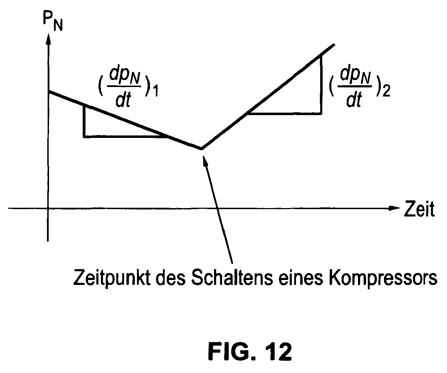

Nachfolgend wird ein weiteres Beispiel angegeben, wie unter Anwendung eines quantitativen Modells einer Kompressoranlage sich das wirksame Puffervolumen einer Kompressoranlage bestimmen lässt. Verdeutlicht wird dies anhand der Kompressoranlage, wie sie in Figur 10 dargestellt ist. Die Kompressoranlage besteht aus den drei Kompressoren 11, 12, 13, den beiden Trocknern 19, 20, den beiden Filtern 14, 15 und dem Druckluftspeicher 21. Aufgabe der Steuer-/Überwachungseinheit 22 ist es zu vermitteln, welches wirksame Puffervolumen der Druckluftspeicher 21 (Volumen eventuell bekannt) zusammen mit dem Rohrleitungsnetz (Volumen meist unbekannt) besitzt. Die Information über das wirksame Puffervolumen wird z.B. für die Berechnung des aktuellen Druckluftverbrauchs verwendet, aus dem wiederum die Zeitpunkte für die Schalthandlungen von Kompressoren abgeleitet werden. Für die Ermittlung des wirksamen Puffervolumens wird die Kompressoranlage aus Figur 10 zunächst in einem Modell abgebildet, welches nur noch die für die Ermittlung des Puffervolumens relevanten Komponenten enthält. Es ergibt sich ein unter dem Aspekt Puffervolumen vereinfachtes Modell AAM, wie es in Figur 11 veranschaulicht wird. Trockner 19, 20 sowie Filter 14, 15 haben für die Berechnung des wirksamen Puffervolumens keine Relevanz und sind daher im aspektspezifischen Ausgangsmodell AAM nicht berücksichtigt. Die Kompressoren 11, 12, 13 sind hingegen relevant, da die Schalthandlungen an Kompressoren dazu genutzt werden, über die Änderung des Gradienten des am Druckluftspeicher 21 angebrachten Drucksensor 26 das wirksame Puffervolumen zu bestimmen. Die Berechnung des Puffervolumens geschieht, indem der Druckgradient vor der Schalthandlung mit dem Druckgradienten nach der Schalthandlung verglichen wird. Die Schalthandlung eines Kompressors führt - bei konstantem Druckluftverbrauch - dazu, dass sich der Druckgradient ändert, wie dies anhand von Figur 12 veranschaulicht ist. Für die Berechnung werden mehrere Annahmen zugrunde gelegt:

- Rund um den Zeitpunkt der Schalthandlung ändert sich das "reale" wirksame Puffervolumen nicht.
- Rund um den Zeitpunkt der Schalthandlung ist der Druckluftverbrauch konstant.

- Die Temperatur der Druckluft im Rohrleitungssystem und im Pufferspeicher ist konstant.

Unter der Annahme, dass die Liefermenge des schaltenden Kompressors bekannt ist, z.B. weil die Liefermenge in einer der Steuer- und Überwachungseinheit 22 zugänglichen Datenbank hinterlegt ist, lässt sich das wirksame Puffervolumen $V_{eff}$ aus der Änderung des Druckgradienten und der Änderung der Liefermenge der Kompressoren $\Delta FAD$ (entspricht der Liefermenge des Einzelkompressors) und des Umgebungsdrucks $p_{amb}$ berechnen:

$$V_{eff} = \frac{\Delta FAD}{\left(\frac{dp_N}{dt}\right)_2 - \left(\frac{dp_N}{dt}\right)_1} \cdot p_{amb}$$

Speziell die Annahme, dass der Druckluftverbrauch rund um den Zeitpunkt der Schalthandlung konstant ist, wird in der Praxis nicht bei jeder Schalthandlung eingehalten werden. Daher ist es möglich und vorteilhaft, die einzelne Schätzung des wirksamen Puffervolumens über eine Filterung (z.B. Mittelwertbildung) mit vorangegangenen Schätzungen zu verrechnen. Für die Weiterverarbeitung wird dann z.B. der Mittelwert der letzten 20 Schätzungen verwendet. Unter der sehr realistischen Annahme, dass die Verbrauchsänderung während des Schaltvorgangs mit gleicher Wahrscheinlichkeit nach oben als auch nach unten erfolgt, werden sich im Mittel die Verbrauchsänderungen bei der Filterung neutralisieren.

Als Beispiel für die Analyse des Verhaltens der Kompressoranlage mag die Analyse unter dem Aspekt reservegrad dienen: Ein Maß für die Zuverlässigkeit einer Kompressoranlage ist der Reservegrad. Der Reservegrad wird maßgeblich dadurch bestimmt, ob der Druckluftverbrauch für das betrachtete Zeitintervall die verfügbare Liefermenge (unter Berücksichtigung der im Druckluftspeicher gespeicherten Druckluft) überstieg bzw. überstiegen hätte, wenn ein Kompressor ausgefallen wäre. Für diese Analyseroutine wird sinnvollerweise auf die als R&I-Schema eingegebene Konfiguration der Kompressoranlage und daraus abgeleiteter Modelle zurückgegriffen. Die Berechnung des Reservegrads kann sowohl als Analyse als auch als Überwachung aufgefasst werden. Wird die Analyse des Reservegrads zur Überwachung eingesetzt, kann der Betreiber der Kompressoranlage reagieren und vor der Unterschreitung des mindestens notwendigen Drucks Druckluftverbraucher abschalten oder die Kompressoranlage mit weiteren Kompressoren ausrüsten. Den Grad der Überlastung könnte man am Ausfall eines Kompressors festmachen:

- Schlimmster Grad der Überlastung: Ist es im betrachteten Zeitraum zu Druckunterschreitungen gekommen, obwohl alle Kompressoren für die Drucklufterzeugung zur Verfügung standen?

- Schlimmer Grad der Überlastung: Wäre es zu Druckunterschreitungen gekommen, wenn der kleinste Kompressor ausgefallen wäre?
- Mittlerer Grad der Überlastung: Wäre es zu Druckunterschreitungen gekommen, wenn ein mittlerer Kompressor ausgefallen wäre?
- Schwacher Grad der Überlastung: Wäre es zu Druckunterschreitungen gekommen, wenn ein großer Kompressor ausgefallen wäre?

Die Analyse, ob beispielsweise ein schlimmer Grad der Überlastung im betrachteten Zeitraum vorlag, erfolgt dadurch, dass eine Simulation der Druckluftstation anhand der abgeleiteten Modelle mit der Vorgabe erfolgt, dass der kleinste Kompressor nicht für die Druckluftversorgung eingesetzt werden darf. Die Simulation selbst kann beispielsweise wie in WO 2010/072803 A1 beschrieben durchgeführt werden.

Durch die Anwendung von abgeleiteten Modellen über das Verhalten der Komponenten einer Kompressoranlage kann eine Prognose für den nächsten Wartungstermin für die Kompressoranlage, für einzelne Kompressoren oder einzelne Peripheriegeräte erstellt werden. Hierfür können abgeleitete Modelle zur Voraussimulation verwendet werden. Mit einem abgeleiteten Modell zur Voraussimulation kann für ein gegebenes Druckluftverbrauchsprofil vorhergesagt werden, wie sich die einzelnen Kompressoren oder Peripheriegeräte der Kompressoranlage über die Zeit verhalten werden für die Durchführung einer Voraussimulation im Rahmen der Modellgenauigkeit unter Berücksichtigung des Steuerungs-Algorithmus in der Steuer-/Überwachungseinrichtung die Schaltbefehle an die Kompressoren so berechnet, wie sie sich in der echten Kompressoranlage für das gegebene Druckluftverbrauchsprofil ergeben würden. Aus den Schaltbefehlen an die Kompressoren lässt sich das Laufverhalten der Kompressoren ableiten. Das Laufverhalten der Kompressoren beschreibt, in welchem Betriebszustand sich ein Kompressor wann befindet.

Sofern ein Modell für die wartungsrelevanten Bauteile oder Betriebsstoffe existiert, welches aus dem Verlauf des Betriebszustands der Kompressoranlage auf den Verschleißzustand des wartungsrelevanten Bauteils/Betriebsstoffs schließen lässt, kann anhand der Ergebnisse der Voraussimulation ermittelt werden, wann ein Verschleißzustand erreicht sein wird, der eine Wartungsmaßnahme notwendig macht. Für Kompressoren gilt heute, dass der Verschleißzustand eines wartungsrelevanten Bauteils/Betriebsstoffs anhand der Laufstunden eines Kompressors ermittelt wird. So ist z.B. der Wechsel des Öls alle 3.000 Betriebsstunden notwendig. In Zukunft ist es möglich, den Verschleißzustand eines wartungsrelevanten Bauteils/Betriebsstoffs nicht mehr nur an den Betriebsstunden, sondern auch an den Umgebungs-/Betriebsbedingungen der Kompressoranlage festzumachen. Wenn die Modelle zur Voraussimulation für die Ermittlung des Verschleißzustands relevanten Effekte (z.B. Verdichtungstemperatur, Druck im Ölabscheidebehälter, Partikelbelastung der angesaugten Luft, Umgebungstemperatur) mit hinreichender Genauigkeit abbilden, lassen sich auch Prognosen für Wartungsmaßnahmen erstellen, wenn der Verschleißzustand des betroffenen Bauteils/Betriebsstoffs nicht allein über die Laufstunden ermittelt werden kann.

Die Genauigkeit für die Prognose des Termins für die nächste Wartungsmaßnahme hängt natürlich davon ab, inwiefern der in der Voraussimulation angenommene Verlauf des Druckluftverbrauchs in der Realität auch auftritt.

Ein Vorteil der Prognose des nächsten Wartungstermins auf Basis von Voraussimulationen im Vergleich zur trivialen Methode der Extrapolation der Laufstunden ist, dass eine Prognose auch dann möglich ist, wenn sich die Zusammensetzung der Druckluftstation ändert (z.B. Hinzufügen oder Entfernen eines Kompressors) oder eine Umparametrierung der Drucklufsteuerung vorgenommen wird (z.B. Änderung der Zu- und Abschaltreihenfolge von Kompressoren).

Die Prognose für die Durchführung der nächsten Wartungsmaßnahme wird regelmäßig wiederholt (z.B. einmal täglich), wobei der in der aktuellen Kompressoranlage seit Durchführung der letzten Prognose beobachtete Verlauf der Kompressorzustände für die Durchführung einer neuen Prognose mit herangezogen wird. Dadurch wird mit der Zeit die Prognose des nächsten Wartungstermins immer genauer, da der Anteil des real beobachteten Verschleißes Eingang in die Prognose findet und damit der Anteil des bis zur nächsten Wartung noch anfallenden Verschleißes (als Unsicherheit im Modell) immer geringer wird.

Das erfindungsgemäße Verfahren zeichnet sich im Ergebnis dadurch aus, dass ausgehend von der Betriebsdatenerfassung bis zur Auswertung der Betriebsdaten zwecks

- Steuern und/oder Regeln
- Überwachen
- Diagnose
- Optimierung
- Prognose eines Wartungstermins (predictive maintenance)

einzelne Verfahrensschritte durchzuführen sind. Die einzelnen Verfahrensschritte können wie folgt definiert werden.

- Die Wirkzusammenhänge in der zu analysierenden Kompressoranlage müssen definiert, ggf. eingegeben werden.
- Betriebsdaten der Kompressoranlage müssen in geeigneter Form standardisiert werden.
- Basierend auf den Wirkzusammenhängen der Kompressoranlage werden ein oder mehrere Ausgangsmodelle sowie hiervon abgeleitete Modelle erstellt.
- Aspektspezifische Modelle der Kompressoranlage werden zur Beantwortung konkreter Fragestellungen herangezogen.

Die beschriebenen vier Verfahrensschritte sind sowohl örtlich als auch zeitlich voneinander entkoppelt. Es existiert lediglich eine temporale Verknüpfung (Vorher-Nachher-Verknüpfung) zwischen den Verfahrensschritten, d.h. einige Verfahrensschritte müssen vor anderen Verfahrensschritten ausgeführt und deren Ergebnisse zur Verfügung gestellt werden, bevor andere Verfahrensschritte, die die Ergebnisse aus vorausgegangenen Verfahrensschritten verwenden, ablaufen können. Die Verfahrensschritte können jedoch auf verschiedene Systeme verteilt werden (müssen es aber nicht). Falls die Verfahrensschritte auf verschiedenen Systemen ablaufen, muss jedoch die Möglichkeit für einen Informationsaustausch (mindestens unidirektional) gegeben sein.

Obwohl die Erfindung anhand einer Kompressoranlage, also für Überdruck, beschrieben wurde, sind sämtliche Prinzipien auch auf eine Vakuumanlage, bei der anstelle von Kompressoren Pumpen zusammenwirken, übertragbar.

Weiterhin wurde vorliegend allgemein von Kompressoren gesprochen, ohne den besonderen Typ der Kompressoren festzulegen. In einer Ausgestaltung können sämtliche Kompressoren beispielsweise als Verdrängerverdichter ausgestaltet sein, wobei dies aber nur als spezielle Ausgestaltung anzusehen ist und nicht generell zwingend ist.

Bezugszeichenliste

| 11, 12, 13 | Kompressoren |
| 14, 15, 16 | Filter |
| 17, 18 | Ventile |
| 19, 20 | Trockner |
| 21 | Druckluftspeicher |
| 22 | Steuer-/Überwachungseinheit |
| 23 | Editor |
| 24 | Speicherabschnitt |
| 25 | Datenerfassungseinheit |
| 26 | Drucksensor |

Patentansprüche

1. Verfahren zum Steuern und/oder Überwachen einer Kompressoranlage umfassend ein oder mehrere Kompressoren (11, 12, 13) und ein oder mehrere Peripheriegeräte (14 bis 21),
wobei die Kompressoren (11, 12, 13) und Peripheriegeräte (14 bis 21) in einer vorbestimmten Konfiguration angeordnet bzw. verschaltet sind, wobei die Kompressoranlage über eine Steuer-/Überwachungseinheit (22) gesteuert und/oder überwacht wird,
**dadurch gekennzeichnet,**

- **dass**, insbesondere nach Erstellung der Kompressoranlage, die konkret gegebene Konfiguration in Gestalt eines R&I-Schemas über einen Editor (23) eingegeben

- **dass** auf Grundlage des eingegebenen R&I-Schemas ein oder mehrere Ausgangsmodelle ($M_1$, $M_2$, ...) erstellt werden,

- **dass** basierend auf diesen Ausgangsmodellen ($M_1$, $M_2$, ...) ein oder mehrere abgeleitete Modelle ($\tilde{M}_a$, $\tilde{M}_b$, ...), die Wirkzusammenhänge zwischen den einzelnen Kompressoren (11, 12, 13) und den Peripheriegeräten (14 bis 21) ggf. auch dynamische Prozesse berücksichtigen, erstellt werden,

- und **dass** das eine oder die mehreren abgeleiteten Modelle ($\tilde{M}_a$, $\tilde{M}_b$, ...) den nachfolgenden Steuer-, Überwachungs-, Diagnose- oder Auswertroutinen zugrunde gelegt wird.

2. Verfahren nach Anspruch 1, **dadurch gekennzeichnet, dass** nach Eingabe der konkret gegebenen Konfiguration diese auf Veranlassung der Steuer-/ Überwachungseinheit (22) abgespeichert wird.

3. Verfahren nach Anspruch 1 oder 2, **dadurch gekennzeichnet, dass** die Eingabe des R&I-Schemas ausschließlich die Konfiguration bzw. Verschaltung der der Steuer- und Überwachungseinheit (22) bereits bekannten Kompressoren (11, 12, 13) und Peripheriegeräte (14 bis 21) umfasst.

4. Verfahren nach Anspruch 1 oder 2, **dadurch gekennzeichnet, dass** die Eingabe des R&I-Schemas neben der Eingabe der Konfiguration bzw. Verschaltung der Kompressoren (11, 12, 13) und Peripheriegeräte (14 bis 21) auch die konkrete Spezifizierung der vorhandenen Kompressoren (11, 12, 13) und Peripheriegeräte (14 bis 21) umfasst.

5. Verfahren nach einem der Ansprüche 1 bis 4, **dadurch gekennzeichnet, dass** die Eingabe des R&I-Schemas nutzerseits vorgenommen wird.

6. Verfahren nach einem der Ansprüche 1 bis 5, **dadurch gekennzeichnet, dass** bei Eingabe des R&I-Schemas vom Editor (23) die Kompressoren (11, 12, 13) und Peripheriegeräte (14 bis 21) als entsprechende graphische Symbole vorgegeben bzw. auswählbar sind.

7. Verfahren nach einem der Ansprüche 1 bis 6, **dadurch gekennzeichnet, dass** bei Eingabe des R&I-Schemas vom Editor die Verknüpfungen der Kompressoren (11, 12, 13) und der Peripheriegeräte (14 bis 21) als entsprechende graphische Symbole vorgegeben bzw. auswählbar sind.

8. Verfahren nach einem der Ansprüche 1 bis 7, **dadurch gekennzeichnet, dass** bei Eingabe des R&I-Schemas vom Editor (23) verschiedene mögliche Spezifizierungen der Kompressoren (11, 12, 13) und/oder der Peripheriegeräte (14 bis 21) vorgegeben bzw. auswählbar sind.

9. Verfahren nach einem der Ansprüche 1 bis 8, **dadurch gekennzeichnet, dass** das Vorhandensein einer oder mehrerer Kompressoren sowie einer oder mehrerer Peripheriegeräte und/oder der Spezifizierung einzelner oder aller Kompressoren und/oder einzelner oder aller Peripheriegeräte von extern übermittelt wird, insbesondere durch ein Upload entsprechender Informationen eingegeben wird, beispielsweise als Upload einer vom Anlagenbauer zur Verfügung gestellten Datei.

10. Verfahren nach einem der Ansprüche 1 bis 9, **dadurch gekennzeichnet, dass** einzelne oder alle Kompressoren (11, 12, 13) und/oder Peripheriegeräte (14 bis 21) sich selbständig bei der Steuer-/Überwachungseinheit (22) anmelden und vorzugsweise auch ihre Spezifizierung selbständig übermitteln.

11. Verfahren nach einem der Ansprüche 1 bis 10, **dadurch gekennzeichnet, dass** die Auswahl graphischer Symbole zur Repräsentation von Kompressoren (11, 12, 13) oder von Peripheriegeräten (14 bis 21) und/oder die Auswahl konkreter Spezifizierungen und/oder die Auswahl spezieller Verknüpfungen durch Markierung in einer Vorschlagsliste erfolgt, wobei das ausgewählte Objekt bzw. die ausgewählte Information anschließend in das im Editor (23) zu erstellende R&I-Schema übertragbar ist.

12. Verfahren nach einem der Ansprüche 1 bis 11, **dadurch gekennzeichnet, dass** für eine Kompressoranlage mehrere domänespezifische R&I-Schemata eingegeben werden, beispielsweise

     - ein oder mehrere Druckluft-R&I-Schema
     - und/oder ein oder mehrere Wärmerückgewinnungs-R&I-Schema
     - und/oder ein oder mehrere kühlkreislaufbezogenes R&I-Schema
     - und/oder eine oder mehrere stromversorgungsbezogener Wirkzusammenhang, insbesondere ein elektrischer Schaltplan.

13. Verfahren nach einem der Ansprüche 1 bis 12, **dadurch gekennzeichnet, dass** das abgeleitete Modell ($\tilde{M}_a$, $\tilde{M}_b$, ...) ein aspektspezifisches Modell (AM) ist, das unter Einsatz eines aspektspezifischen Analysealgorithmus aus den einen oder mehreren Ausgangsmodellen ($M_1$, $M_2$, ...) oder aus einem oder mehreren Zwischenmodellen ($M_1'$, $M_2'$, ..., $AAM_1$, $AAM_2$, ...) erstellt wird.

**14.** Verfahren nach einem der Ansprüche 1 bis 13, **dadurch gekennzeichnet, dass** die Information über das aspektspezifische Verhalten eines Kompressors (11, 12, 13) oder eines Peripheriegerätes (14 bis 21) in einem oder mehreren im Aspekt-Ausgangsmodell (AAM) zu berücksichtigenden Komponentenmodell (KM) und/oder im Analysealgorithmus selbst enthalten ist.

**15.** Verfahren nach einem der Ansprüche 1 bis 14, **dadurch gekennzeichnet, dass** unter Berücksichtigung standardisierter Betriebsdaten der Kompressoranlage unter Verwendung des oder der abgeleiteten Modelle ($\tilde{M}_a$, $\tilde{M}_b$, ...) eine Prognose für den nächsten Wartungstermin erstellt wird.

**16.** Verfahren nach einem der Ansprüche 1 bis 14, **dadurch gekennzeichnet, dass** unter Berücksichtigung standardisierter Betriebsdaten der Kompressor- anlage unter Verwendung des oder der abgeleiteten Modelle ($\tilde{M}_a$, $\tilde{M}_b$, ...) eine Fehlerdiagnose durchgeführt wird.

**17.** Kompressoranlage umfassend ein oder mehrere Kompressoren (11, 12, 13) sowie ein oder mehrere Peripheriegeräte (14 bis 21), eine Steuer-/Überwachungseinheit (22) sowie einen Editor (23), wobei die Kompressoren (11, 12, 13) und Peripheriegeräte (14 bis 21) in einer vorbestimmten Konfiguration angeordnet bzw. verschaltet sind, wobei die Kompressoranlage über eine Steuer-/Überwachungseinheit (22) gesteuert und/oder überwacht wird,

**dadurch gekennzeichnet,**

- **dass** der Editor (23) zur Eingabe der konkret gegebenen Konfiguration in Gestalt eines R&I-Schemas ausgebildet und bestimmt ist und der Editor (23) mit der Steuer-/Überwachungseinheit (22) in Wirkverbindung steht derart, dass das eingegebene R&I-Schema an die Steuer-/Überwachungseinheit (22) übertragen wird, um es nachfolgenden Steuer-, Überwachungs-, Diagnose- oder Auswertroutinen zugrunde zu legen und
- **dass** die Steuer-/Überwachungseinheit (22) weiterhin derart ausgebildet und eingerichtet ist, dass sie bei diesen Steuer-, Überwachungs-, Diagnose- oder Auswertroutinen auf ein oder mehrere abgeleitete Modelle ($\tilde{M}_1$, $\tilde{M}_2$, ...) der Kompressoranlage zurückgreift, das basierend auf einem oder mehreren Ausgangsmodellen ($M_1$, $M_2$, ...) der Kompressoranlage erstellt wird, aber auch Wirkzusammenhänge zwischen den einzelnen Kompressoren (11, 12, 13) und der Peripheriegeräte (14 bis 21) sowie ggf. auch dynamische Prozesse berücksichtigt.

**18.** Kompressoranlage nach Anspruch 17, **dadurch gekennzeichnet, dass** die Steuer-/Überwachungseinheit (22) für die Abspeicherung des eingegebenen R&I-Schemas Sorge trägt.

**19.** Kompressoranlage nach Anspruch 17 oder 18, **dadurch gekennzeichnet, dass** in der Steuer-/Überwachungseinheit (22) Spezifizierungen der in der Kompressoranlage eingesetzten Kompressoren (11, 12, 13) und Peripheriegeräte (14 bis 21) gespeichert sind derart, dass die Eingabe des R&I-Schemas ausschließlich die Konfiguration bzw. Verschaltung der Kompressoren (11, 12, 13) und Peripheriegeräte (14 bis 21) umfasst.

**20.** Kompressoranlage nach einem der Ansprüche 17 bis 19, **dadurch gekennzeichnet, dass** die Steuer-/Überwachungseinheit (22) in einem Speicherabschnitt (24) Listen von Spezifizierungen möglicher Kompressoren (11, 12, 13) oder von Peripheriegeräten (14 bis 21) und/oder graphische Symbole zur Repräsentation eingesetzter Kompressoren (11, 12, 13) bzw. eingesetzter Peripheriegeräte (14 bis 21) und/oder Repräsentation möglicher Verknüpfungen zur Auswahl und Erstellung eines R&I-Schemas im Editor (23) bereithält.

**21.** Kompressoranlage nach einem der Ansprüche 17 bis 20, **dadurch gekennzeichnet, dass** die Steuer-/Überwachungseinheit (22) in einem oder mehreren miteinander in Wirkverbindung stehenden Servern oder in einem oder mehreren virtuellen Rechnern ganz oder teilweise implementiert ist.

**22.** Steuer-/Überwachungseinheit zum Steuern und/oder Überwachen einer Kompressoranlage umfassend ein oder mehrere Kompressoren (11, 12, 13) und ein oder mehrere Peripheriegeräte (17 bis 21), wobei die Kompressoren (11, 12, 13) und Peripheriegeräte (14 bis 21) in einer vorbestimmten Konfiguration angeordnet bzw. verschaltet sind und die Steuer-/Überwachungseinheit die Steuerung und/oder Überwachung der Kompressoranlage bewirkt und mit einem Editor (23) zusammenwirkt, **dadurch gekennzeichnet, dass** der Editor (23) zur Eingabe der konkret gegebenen Konfiguration in Gestalt eines R&I-Schemas ausgebildet und bestimmt ist und der Editor (23) mit der Steuer-/Überwachungseinheit (22) in Wirkverbindung steht derart, dass das eingegebene R&I-Schema an die Steuer-/Überwachungseinheit (22) übertragen wird, um es nachfolgenden Steuer-, Überwachungs-, Diagnose- oder Auswertroutinen zugrunde zu legen, und dass die Steuer-/Überwachungseinheit (22) weiterhin derart ausgebildet und eingerichtet ist, dass sie bei diesen Steuer-, Überwachungs-, Diagnose- oder Auswertroutinen auf ein oder mehrere abgeleitete Modelle ($\tilde{M}_1$, $\tilde{M}_2$, ...) der Kompressoranlage zurückgreift, das basierend auf einem oder mehreren Ausgangsmodellen ($M_1$, $M_2$, ...) der Kompressoranlage erstellt wird, aber auch Wirkzusammenhänge zwischen den einzelnen Kompressoren (11, 12, 13) und der Peripheriegeräte (14 bis 21) sowie ggf. auch dynamische Prozesse berücksichtigt.

**Claims**

1. A method for controlling and/or monitoring a compressor plant comprising one or more compressors (11, 12, 13) and one or more peripheral devices (14 to 21), wherein the compressors (11, 12, 13) and peripheral devices (14 to 21) are arranged, respectively interconnected in a predetermined configuration,
   wherein the compressor plant is controlled and/or monitored via a controlling/monitoring unit (22), **characterized in**

   - **that**, optionally after establishing the compressor plant, the specifically given configuration is input in the form of a P&ID via an editor (23),
   - **that** one or more initial models ($M_1$, $M_2$, ...) are generated on the basis of the P&ID,
   - **that**, based on these initial models ($M_1$, $M_2$, ...), one or more derived models ($\tilde{M}_a$, $\tilde{M}_b$,...) showing the operative correlations between the individual compressors (11, 12, 13) and the peripheral devices (14 to 21), if necessary also taking into account dynamic processes, are generated,
   - and **that** the one or more derived models ($\tilde{M}_a$, $\tilde{M}_b$,...) are applied as a basis for the subsequent controlling, monitoring, diagnostic or evaluating routines.

2. The method according to claim 1, **characterized in that**, after inputting the specifically given configuration, the latter is stored at the instigation of the controlling/monitoring unit (22).

3. The method according to claim 1 or 2, **characterized in that** the inputting of the P&ID comprises exclusively the configuration, respectively interconnection of the compressors (11, 12, 13) and peripheral devices (14 to 21) already known to the controlling and monitoring unit (22).

4. The method according to claim 1 or 2, **characterized in that** the inputting of the P&ID comprises, apart from the input of the configuration, respectively interconnection of the compressors (11, 12, 13) and peripheral devices (14 to 21), also the specific specification of the existing compressors (11, 12, 13) and peripheral devices (14 to 21).

5. The method according to any one of claims 1 to 4, **characterized in that** the inputting of the P&ID is performed by a user.

6. The method according to any one of claims 1 to 5, **characterized in that**, when the P&ID is input by the editor (23), the compressors (11, 12, 13) and peripheral devices (14 to 21) are predetermined, respectively may be selected, as corresponding graphical symbols.

7. The method according to any one of claims 1 to 6, **characterized in that**, when the P&ID is input by the editor, the links of the compressors (11, 12, 13) and peripheral devices (14 to 21) are predetermined, respectively may be selected, as corresponding graphical symbols.

8. The method according to any one of claims 1 to 7, **characterized in that**, when the P&ID is input by the editor (23), various optional specifications of the compressors (11, 12, 13) and/or peripheral devices (14 to 21) are predetermined, respectively may be selected.

9. The method according to any one of claims 1 to 8, **characterized in that** the presence of one or more compressors as well as one or more peripheral devices and/or the specification of individual or the entirety of compressors and/or individual or the entirety of peripheral devices is transmitted from outside, optionally input by unloading corresponding information, for example, as an upload of a file provided by the plant manufacturer.

10. The method according to any one of claims 1 to 9, **characterized in that** individual or all compressors (11, 12, 13) and/or peripheral devices (14 to 21) log themselves into the controlling/monitoring unit (22) automatically and preferably also transmit their specification automatically.

11. The method according to any one of claims 1 to 10, **characterized in that** the selection of graphical symbols for representing compressors (11, 12, 13) or peripheral devices (14 to 21) and/or the selection of specific specifications and/or the selection of particular links is performed by marking in a list of proposals, wherein the selected object, respectively the selected information may be subsequently transferred into the P&ID to be generated in the editor (23).

12. The method according to any one of claims 1 to 11, **characterized in that** a plurality of domain-specific P&IDs are input for one compressor plant, such as

    - one or more compressed air P&IDs
    - and/or one or more heat recovery P&IDs

- and/or one or more cooling circuit-related P&IDs

- and/or one or more power supply-related operative correlations, optionally an electrical circuit diagram.

13. The method according to any one of claims 1 to 12, **characterized in that** the derived model ($\tilde{M}_a$, $\tilde{M}_b$, ...) is an aspect-specific model (AM) which is generated using an aspect-specific analysis algorithm from the one or more initial models ($M_1$, $M_2$, ...) or from one or more intermediate models ($M_1'$, $M_2'$, $AAM_1$, $AAM_2$, ...).

14. The method according to any one of claims 1 to 13, **characterized in that** the information on the aspect-specific behavior of a compressor (11, 12, 13) or of a peripheral device (14 to 21) is contained in one or more component models (KM) to be taken into account in the aspect initial model (AAM) and/or is contained in the analysis algorithm itself.

15. The method according to any one of claims 1 to 14, **characterized in that** a forecast for the next maintenance date is generated taking into account standardized operational data of the compressor plant using the derived model(s) ($\tilde{M}_a$, $\tilde{M}_b$, ...).

16. The method according to any one of claims 1 to 14, **characterized in that** a fault diagnosis is performed taking into account standardized operational data of the compressor plant using the derived model(s) ($\tilde{M}_a$, $\tilde{M}_b$, ...).

17. A compressor plant comprising one or more compressors (11, 12, 13) and one or more peripheral devices (14 to 21), a controlling/monitoring unit (22), as well as an editor (23), wherein the compressors (11, 12, 13) and peripheral devices (14 to 21) are arranged, respectively interconnected in a predetermined configuration, wherein the compressor plant is controlled and/or monitored via a controlling/monitoring unit (22), **characterized in**

- **that** the editor (23) is configured and intended to input the specifically given configuration in the form of a P&ID, and the editor (23) is in operative connection with the controlling/monitoring unit (22) such that the input P&ID is transmitted to the controlling/monitoring unit (22) so as to be applied as a basis to subsequent controlling, monitoring, diagnostic or evaluating routines, and

- **that** the controlling/monitoring unit (22) is further configured and arranged so as to refer in these controlling, monitoring, diagnostic or evaluating routines to the compressor plant's one or

more derived models ($\tilde{M}_a$, $\tilde{M}_b$, ...) which is (are) generated based on one or more initial models (M, M, ...) of the compressor plant, but also takes into account operative correlations between the individual compressors (11, 12, 13) and peripheral devices (14 to 21) as well as dynamic processes, if necessary.

18. The compressor plant according to claim 17, **characterized in that** the controlling/monitoring unit (22) ensures the storing of the input P&ID.

19. The compressor plant according to claim 17 or 18, **characterized in that** specifications of the compressors (11, 12, 13) and peripheral devices (14 to 21) used in the compressor plant are stored in the controlling/monitoring unit (22) such that the input of the P&ID comprises exclusively the configuration, respectively interconnection of the compressors (11, 12, 13) and peripheral devices (14 to 21).

20. The compressor plant according to any one of claims 17 to 19, **characterized in that** the controlling/monitoring unit (22) keeps in a memory section (24) lists of specifications of optional compressors (11, 12, 13) or peripheral devices (14 to 21) and/or graphical symbols for depicting employed compressors (11, 12, 13), respectively employed peripheral devices (14 to 21), and/or for depicting optional links for selecting and generating a P&ID in the editor (23).

21. The compressor plant according to any one of claims 17 to 20, **characterized in that** the controlling/monitoring unit (22) is entirely or partially implemented in one or more servers being in mutual operative connection or in one or more virtual computers.

22. A controlling/monitoring unit for controlling and/or monitoring a compressor plant comprising one or more compressors (11, 12, 13) and one or more peripheral devices (17 to 21), wherein the compressors (11, 12, 13) and peripheral devices (14 to 21) are arranged, respectively interconnected in a predetermined configuration and the controlling/monitoring unit causes the compressor plant to be controlled and/or monitored and cooperates with an editor (23), **characterized in that** the editor (23) is configured and intended to input the specifically given configuration in the form of a P&ID diagram, and the editor (23) is in operative connection with the controlling/monitoring unit (22) such that the input P&ID is transmitted to the controlling/monitoring unit (22) so as to be applied as a basis to subsequent controlling, monitoring, diagnostic or evaluating routines, and that the controlling/monitoring unit (22) is further configured and arranged so as to refer in these controlling, monitoring, diagnostic or evaluating routines to the compressor plant's one or more derived models ($\tilde{M}_a, \tilde{M}_b$, ...) which is (are) generated based on one or more initial models (M, M, ...) of the compressor plant, but also takes into account operative correlations between the individual compressors (11, 12, 13) and peripheral devices (14 to 21) as well as dynamic processes, if necessary.

**Revendications**

1. Procédé destiné à commander et/ou surveiller une installation de compresseurs comprenant un ou plusieurs compresseurs (11, 12, 13) et un ou plusieurs appareils périphériques (14 à 21),
sachant que les compresseurs (11, 12, 13) et appareils périphériques (14 à 21) sont disposés ou connectés dans une configuration prédéterminée,
sachant que l'installation de compresseurs est commandée et/ou surveillée via une unité de commande/surveillance (22),
**caractérisé en ce**

   - **que**, en particulier après élaboration de l'installation de compresseurs, la configuration concrètement donnée est saisie via un éditeur (23) sous forme d'un schéma R&I,
   - **que**, sur la base du schéma R&I saisi, un ou plusieurs modèles de départ ($M_1$, $M_2$, ...) sont élaborés,
   - **que**, sur la base de ces modèles de départ ($M_1$, $M_2$, ...), un ou plusieurs modèles dérivés ($\tilde{M}_a$, $\tilde{M}_b$, ...), qui tiennent compte d'interactions entre les compresseurs (11, 12, 13) individuels et les appareils périphériques (14 à 21) ainsi qu'éventuellement de processus dynamiques, sont élaborés,
   - et en ce que l'un ou les plusieurs modèles de départ ($\tilde{M}_a$, $\tilde{M}_b$, ...) servent de base aux routines de commande, de surveillance, de diagnostic ou d'évaluation consécutives.

2. Procédé selon la revendication 1, **caractérisé en ce que**, après saisie de la configuration concrètement donnée, celle-ci est mémorisée à l'instigation de l'unité de commande/surveillance (22).

3. Procédé selon la revendication 1 ou 2, **caractérisé en ce que** la saisie du schéma R&I comprend exclusivement la configuration ou connexion des compresseurs (11, 12, 13) et appareils périphériques (14 à 21) déjà connus de l'unité de commande et de surveillance (22).

4. Procédé selon la revendication 1 ou 2, **caractérisé en ce que** la saisie du schéma R&I comprend aussi, en plus de la saisie de la configuration ou connexion des compresseurs (11, 12, 13) et appareils périphériques (14 à 21), la spécification concrète des compresseurs (11, 12, 13) et appareils périphériques (14 à 21) existants.

5. Procédé selon l'une des revendications 1 à 4, **caractérisé en ce que** la saisie du schéma R&I est effectuée côté utilisateur.

6. Procédé selon l'une des revendications 1 à 5, **caractérisé en ce que**, lors de la saisie du schéma R&I depuis l'éditeur (23), les compresseurs (11, 12, 13) et appareils périphériques (14 à 21) sont prescrits ou sélectionnables comme symboles graphiques correspondants.

7. Procédé selon l'une des revendications 1 à 6, **caractérisé en ce que**, lors de la saisie du schéma R&I depuis l'éditeur, les liaisons des compresseurs (11, 12, 13) et des appareils périphériques (14 à 21) sont prescrites ou sélectionnables comme symboles graphiques correspondants.

8. Procédé selon l'une des revendications 1 à 7, **caractérisé en ce que**, lors de la saisie du schéma R&I depuis l'éditeur (23), diverses spécifications possibles des compresseurs (11, 12, 13) et/ou des appareils périphériques (14 à 21) sont prescrites ou sélectionnables.

9. Procédé selon l'une des revendications 1 à 8, **caractérisé en ce que** la présence d'un ou de plusieurs compresseurs ainsi que d'un ou de plusieurs appareils périphériques et/ou de la spécification de compresseurs individuels ou de tous les compresseurs et/ou d'appareils périphériques individuels ou de tous les appareils périphériques est transmise de l'extérieur, en particulier est saisie via un téléchargement d'informations correspondantes, par exemple comme téléchargement d'un fichier mis à disposition par le constructeur d'installation.

10. Procédé selon l'une des revendications 1 à 9, **caractérisé en ce que** des compresseurs individuels ou tous les compresseurs (11, 12, 13) et/ou des appareils périphériques individuels ou tous les appareils périphériques (14 à 21) s'annoncent de façon autonome auprès de l'unité de commande/surveillance (22) et transmettent aussi de préférence leur spécification de façon autonome.

11. Procédé selon l'une des revendications 1 à 10, **caractérisé en ce que** la sélection de symboles graphiques pour la représentation de compresseurs (11, 12, 13) ou d'appareils périphériques (14 à 21) et/ou la sélection de spécifications concrètes et/ou la sélection de liaisons spéciales s'effectue par marquage dans une liste de propositions, sachant que l'objet sélectionné ou l'information sélectionnée est ensuite transposable dans le schéma R&I à élaborer dans l'éditeur (23).

**12.** Procédé selon l'une des revendications 1 à 11, **caractérisé en ce que**, pour une installation de compresseurs, plusieurs schémas R&I spécifiques à un domaine sont saisis, par exemple

   - un ou plusieurs schémas R&I d'air comprimé,
   - et/ou un ou plusieurs schémas R&I de récupération de chaleur,
   - et/ou un ou plusieurs schémas R&I relatifs à un circuit de refroidissement,
   - et/ou une ou plusieurs interactions relatives à l'alimentation électrique, en particulier un schéma de connexion électrique.

**13.** Procédé selon l'une des revendications 1 à 12, **caractérisé en ce que** le modèle dérivé $(\tilde{M}_a, \tilde{M}_b, ...)$ est un modèle spécifique à l'aspect (AM) qui est élaboré moyennant un algorithme d'analyse spécifique à l'aspect à partir de l'un ou des plusieurs modèles de départ $(M_1, M_2, ...)$ ou à partir d'un ou de plusieurs modèles intermédiaires $(M_1', M_2', ..., AAM_1, AAM_2, ...)$.

**14.** Procédé selon l'une des revendications 1 à 13, **caractérisé en ce que** l'information sur le comportement spécifique à l'aspect d'un compresseur (11, 12, 13) ou d'un appareil périphérique (14 à 21) est contenu dans un ou plusieurs modèles de composant (KM) à prendre en compte dans le modèle de départ d'aspect (AAM) et/ou est contenu dans l'algorithme d'analyse lui-même.

**15.** Procédé selon l'une des revendications 1 à 14, **caractérisé en ce que**, compte tenu de données d'exploitation standardisées de l'installation de compresseurs, un pronostic pour la prochaine date d'entretien est élaboré moyennant le ou les modèles dérivés $(\tilde{M}_a, \tilde{M}_b, ...)$.

**16.** Procédé selon l'une des revendications 1 à 14, **caractérisé en ce que**, compte tenu de données d'exploitation standardisées de l'installation de compresseurs, un diagnostic d'erreur est effectué moyennant le ou les modèles dérivés $(\tilde{M}_a, \tilde{M}_b, ...)$.

**17.** Installation de compresseurs comprenant un ou plusieurs compresseurs (11, 12, 13) ainsi qu'un ou plusieurs appareils périphériques (14 à 21), une unité de commande/surveillance (22) ainsi qu'un éditeur (23), sachant que les compresseurs (11, 12, 13) et appareils périphériques (14 à 21) sont disposés ou connectés dans une configuration prédéterminée, sachant que l'installation de compresseurs est commandée et/ou surveillée par une unité de commande/surveillance (22), **caractérisé en ce**

   - **que** l'éditeur (23) est constitué et déterminé pour la saisie de la configuration concrètement donnée sous forme d'un schéma R&I et l'éditeur (23) se trouve en interaction avec l'unité de commande/surveillance (22) de telle manière que le schéma R&I saisi est transposé à l'unité de commande/surveillance (22) pour servir de base à des routines de commande, de surveillance, de diagnostic ou d'évaluation consécutives, et
   - **que** l'unité de commande/surveillance (22) est en outre constituée et configurée de telle manière qu'elle a recours, lors de ces routines de commande, de surveillance, de diagnostic ou d'évaluation, à un ou plusieurs modèles dérivés $(\tilde{M}_1, \tilde{M}_2, ...)$ de l'installation de compresseurs, qui est élaboré sur la base d'un ou de plusieurs modèles de départ $(M_1, M_2, ...)$ de l'installation de compresseurs, mais tient aussi compte d'interactions entre les compresseurs (11, 12, 13) individuels et les appareils périphériques (14 à 21) ainsi qu'éventuellement de processus dynamiques.

**18.** Installation de compresseurs selon la revendication 17, **caractérisée en ce que** l'unité de commande/surveillance (22) prend en charge la mémorisation du schéma R&I saisi.

**19.** Installation de compresseurs selon la revendication 17 ou 18, **caractérisée en ce que**, dans l'unité de commande/surveillance (22), des spécifications des compresseurs (11, 12, 13) et appareils périphériques (14 à 21) mis en oeuvre dans l'installation de compresseurs sont enregistrées de telle manière que la saisie du schéma R&I comprend exclusivement la configuration ou connexion des compresseurs (11, 12, 13) et appareils périphériques (14 à 21).

**20.** Installation de compresseurs selon l'une des revendications 17 à 19, **caractérisée en ce que** l'unité de commande/surveillance (22) met à disposition, dans une partie de mémoire (24), des listes de spécifications de compresseurs (11, 12, 13) possibles ou d'appareils périphériques (14 à 21) et/ou des symboles graphiques pour la représentation de compresseurs (11, 12, 13) mis en oeuvre ou d'appareils périphériques (14 à 21) mis en oeuvre et/ou la représentation de liaisons possibles pour la sélection et l'élaboration d'un schéma R&I dans l'éditeur (23).

**21.** Installation de compresseurs selon l'une des revendications 17 à 20, **caractérisée en ce que** l'unité de commande/surveillance (22) est implémentée en tout ou en partie dans un ou plusieurs serveurs se trouvant en interaction les uns avec les autres ou dans un ou plusieurs ordinateurs virtuels.

**22.** Unité de commande/surveillance destinée à commander et/ou surveiller une installation de compresseurs comprenant un ou plusieurs compresseurs (11, 12, 13) et un ou plusieurs appareils périphériques (17 à 21),
sachant que les compresseurs (11, 12, 13) et appareils périphériques (14 à 21) sont disposés ou connectés dans une configuration prédéterminée et que l'unité de commande/surveillance provoque la commande et/ou la surveillance de l'installation de compresseurs et interagit avec un éditeur (23), **caractérisée en ce que**

- l'éditeur (23) est constitué et déterminé pour la saisie de la configuration concrètement donnée sous forme d'un schéma R&I et l'éditeur (23) se trouve en interaction avec l'unité de commande/surveillance (22) de telle manière que le schéma R&I saisi est transposé à l'unité de commande/surveillance (22) pour servir de base à des routines de commande, de surveillance, de diagnostic ou d'évaluation consécutives, et
- **en ce que** l'unité de commande/surveillance (22) est en outre constituée et configurée de telle manière qu'elle a recours, lors de ces routines de commande, de surveillance, de diagnostic ou d'évaluation, à un ou plusieurs modèles dérivés ($\tilde{M}_1$, $\tilde{M}_2$, ...) de l'installation de compresseurs, qui est élaboré sur la base d'un ou de plusieurs modèles de départ ($M_1$, $M_2$, ...) de l'installation de compresseurs, mais tient aussi compte d'interactions entre les compresseurs (11, 12, 13) individuels et les appareils périphériques (14 à 21) ainsi qu'éventuellement de processus dynamiques.

**FIG. 1**

**FIG. 2**

**FIG. 3**

WENN „V1 OFFEN" UND „V2 GESCHLOSSEN" DANN

SONST

**FIG. 4**

**FIG. 5**

```
WENN V1 „offen" UND V2 „offen"
      T1: K1, K2, K3
      T2: K1, K2, K3
WENN V1 „offen" UND V2 „geschlossen"
      T1: K1, K2
      T2: K3
WENN V1 „geschlossen" UND V2 „offen"
      T1: K1
      T2: K2, K3
WENN V1 „geschlossen" UND V2 „geschlossen"
      T1: K1
      T2: K3
```

**FIG. 6**

**FIG. 7**

**FIG. 8**

**FIG. 9**

**FIG.10**

**FIG.11**

$P_N$

$(\dfrac{dp_N}{dt})_1$

$(\dfrac{dp_N}{dt})_2$

Zeit

Zeitpunkt des Schaltens eines Kompressors

**FIG. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10308725 A1

- WO 2010072803 A1

**In der Beschreibung aufgeführte Nicht-Patentliteratur**

- PandIX - Exchanging P&I diagram model data. *Proceedings of 2012 IEEE 17th International Conference on Emerging Technologies & Factory Automation, Krakau,* September 2012

- IEC PAS 62424 - Grafische Darstellung PLT-Aufgaben und Datenaustausch zu Engineering-Systemen. *atp Automatisierungspraxis,* 2007, vol. 49 (5), 22-29